# FASCICULE DE BREVET EUROPEEN

(11) **EP 4 704 409 B1**
(45) Date de publication et mention de la délivrance du brevet: **21.10.2026**
(21) Numéro de dépôt: 25193865.0
(22) Date de dépôt: 04.08.2025
(51) Int. Cl.: H04L 67/12, H04L 69/08

(54) **PROCEDE DE COMMUNICATION DANS UN RESEAU DE COMMUNICATION MIXTE VIA UN DISPOSITIF DE TRADUCTION DE PROTOCOLE**
VERFAHREN ZUR KOMMUNIKATION IN EINEM GEMISCHTEN KOMMUNIKATIONSNETZWERK ÜBER EINE PROTOKOLLÜBERSETZUNGSEINRICHTUNG
METHOD FOR COMMUNICATING IN A MIXED COMMUNICATION NETWORK VIA A PROTOCOL TRANSLATION DEVICE

(30) Priorité: 27.08.2024 FR 2409157
(43) Date de publication de la demande: 04.03.2026
(73) Titulaire: SAGEMCOM ENERGY & TELECOM SAS, 92270 Bois-Colombes (FR)
(72) Inventeur: HLEL, El Kefi, 92270 BOIS-COLOMBES (FR); RAZAZIAN, Kaveh, 92270 BOIS-COLOMBES (FR)
(74) Mandataire: Cabinet Le Guen Maillet

(56) Documents cités:
- US-A1- 2006 195 613
- US-A1- 2016 127 515

## Description

### DOMAINE TECHNIQUE

Le domaine de l'invention est celui des réseaux de communication implémentés sur un réseau d'alimentation électrique et comportant un dispositif concentrateur et une pluralité de dispositifs nœuds.

Plus précisément, la présente invention concerne un procédé de communication, exécuté par un dispositif de traduction de protocole, dans un réseau de communication mixte implémenté sur un réseau d'alimentation électrique et comprenant un dispositif concentrateur, implémentant un premier protocole de communication, et un ensemble de dispositifs nœuds, comprenant lui-même un premier sous-ensemble, contenant au moins un premier dispositif nœud implémentant le premier protocole de communication, et un deuxième sous-ensemble, contenant au moins un dispositif nœud implémentant un deuxième protocole de communication.

La présente invention concerne également un produit programme d'ordinateur, un support de stockage et un dispositif de traduction de protocole permettant la mise en œuvre d'un tel procédé, ainsi qu'un réseau de communication mixte comprenant au moins un dispositif de traduction de protocole.

### ETAT DE LA TECHNIQUE ANTERIEURE

D'une manière connue, de nombreux réseaux de communication ont une topologie (au moins au niveau logique) sous forme d'arbre pour permettre d'étendre la portée des communications. Les dispositifs d'un tel réseau de communication sont généralement appelés nœuds, ou encore dispositifs nœuds. L'un des dispositifs nœuds, appelé dispositif nœud racine, tient le rôle de racine du réseau de communication et gère le réseau de communication de manière à organiser le partage d'un même support de communication (émission de balises, gestion de topologie, etc.). Certains dispositifs nœuds peuvent servir de relais pour le compte d'autres dispositifs nœuds du réseau de communication lorsque ces derniers n'arrivent pas à recevoir directement des informations du dispositif nœud racine.

On trouve notamment de tels réseaux de communication dans le cadre des réseaux d'alimentation électrique de type AMM (« Automated Meter Management » en anglais), mettant en œuvre une gestion automatique de relevés de compteurs électriques et dans lesquels des communications sont établies entre des compteurs électriques, dits intelligents ou communicants (« smart meters » en anglais), et un dispositif concentrateur de données (« data concentrator » en anglais). C'est le cas par exemple dans les spécifications PRIME (« PoweRline Intelligent Metering Evolution » en anglais). Le dispositif concentrateur est alors la racine du réseau de communication. Les échanges entre les compteurs électriques (dispositifs nœuds) et le dispositif concentrateur s'appuient sur des communications par courants porteurs en ligne (CPL, ou PLC pour « Power-Line Communications » en anglais). US 2016/127515 représente un document d'art antérieur pertinent pour la présente demande.

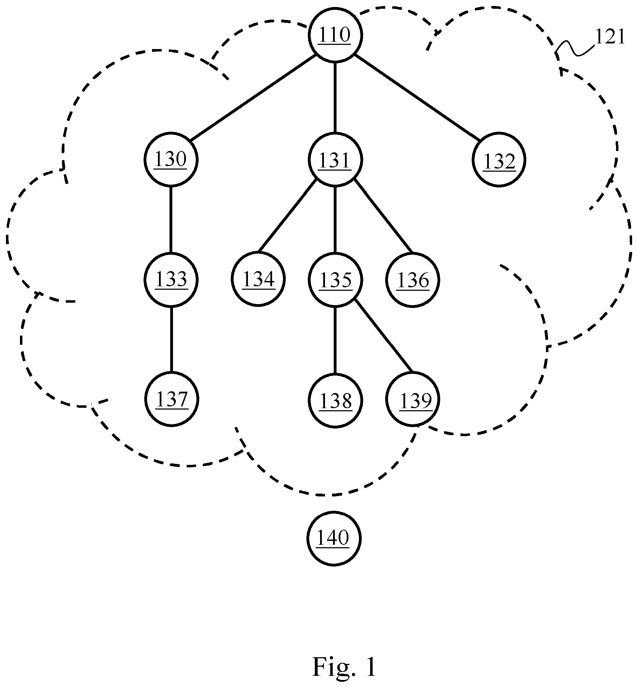

A titre d'exemple, la **Fig. 1** illustre schématiquement un réseau de communication non-mixte 121, implémenté sur un réseau d'alimentation électrique, selon l'état de la technique. La racine du réseau de communication 121 est un dispositif concentrateur 110. Le réseau de communication 121 est destiné à permettre de connecter une pluralité de dispositifs nœuds 130 à 139 au dispositif concentrateur 110. Dans le cas où les dispositifs nœuds sont des compteurs électriques, le réseau de communication 121 permet d'établir des communications par courants porteurs en ligne (CPL) afin que le dispositif concentrateur 110 puisse notamment procéder automatiquement à des relevés de comptage de consommation électrique effectués par ces compteurs électriques.

Dans un tel réseau de communication, un signal émis par un dispositif nœud n'est en général pas visible en tout point du réseau de communication. Chaque dispositif nœud émetteur de signaux dispose alors d'un « domaine de voisinage », c'est-à-dire d'un sous-ensemble du réseau de communication dans lequel tout dispositif nœud connecté peut recevoir de manière intelligible lesdits signaux. Le domaine de voisinage correspond à la portée des signaux émis, en fonction de paramètres prédéterminés de transmission (par exemple puissance, schéma de modulation et de codage...) du dispositif nœud émetteur du signal et également en fonction de caractéristiques du canal de communication (atténuation, bruit, impédance...). Chaque dispositif nœud du réseau de communication dispose ainsi de son propre domaine de voisinage.

Pour permettre d'étendre la portée des communications par courants porteurs en ligne, des dispositifs nœuds jouent le rôle de relais de données entre d'autres dispositifs nœuds et le dispositif concentrateur 110. Un tel dispositif relais est appelé commutateur (« switch » en anglais) dans les spécifications PRIME. Certaines communications entre des dispositifs nœuds et le dispositif concentrateur 110 peuvent nécessiter plusieurs relais de données successifs. Un dispositif nœud ne jouant pas le rôle de relais est appelé dispositif terminal. Une telle structure définit donc des rattachements de dispositifs nœuds les uns aux autres pour former l'arbre, c'est-à-dire la hiérarchie constituant le réseau de communication 121. Chaque dispositif nœud du réseau de communication 121 est ainsi associé à un niveau hiérarchique, correspondant typiquement à la quantité de dispositifs relais via lesquels ledit dispositif nœud doit passer pour atteindre la racine 110 du réseau de communication 121.

Dans l'exemple de la Fig. 1, le réseau de communication 121 comprend, outre le dispositif concentrateur 110, un dispositif nœud terminal 132, qui est directement rattaché au dispositif concentrateur 110, et deux autres dispositifs nœuds 130 et 131 qui sont aussi directement rattachés au dispositif concentrateur 110 et jouent le rôle de dispositifs relais. Le dispositif nœud 130 joue le rôle de dispositif relais entre le dispositif concentrateur 110 et un dispositif nœud 133 qui, lui-même, joue le rôle de dispositif relais entre le dispositif nœud 130 et un dispositif terminal 137.Le dispositif nœud 131 joue le rôle de dispositif relais entre le dispositif concentrateur 110 et trois autres dispositifs nœuds 134, 135 et 136. Les dispositifs nœuds 134 et 136 sont des dispositifs terminaux, et le dispositif nœud 135 joue le rôle de dispositif relais entre le dispositif nœud 131 et deux dispositifs terminaux 138 et 139. Les dispositifs nœuds 130, 131 et 132 sont associés à un niveau hiérarchique de valeur « 0 », les dispositifs nœuds 133, 134, 135 et 136 sont associés à un niveau hiérarchique de valeur « 1 », et ainsi de suite. Un dispositif nœud qui n'est pas rattaché au réseau de communication 121 est un dispositif déconnecté, tel que le dispositif nœud 140 sur la Fig. 1.

Il faut comprendre que la topologie logique du réseau de communication 121 n'est pas figée. La Fig. 1 représente la topologie logique du réseau de communication 121 à un instant donné. A cause notamment des phénomènes d'interférences (tels que bruit, atténuation, variation d'impédance, diaphonie, collision de signaux...), des dispositifs nœuds peuvent se trouver déconnectés du réseau de communication 121 et cherchent alors à se réenregistrer au sein du réseau de communication 121. La topologie logique du réseau de communication 121 à ce moment-là est alors probablement différente de la topologie logique du réseau de communication 121 avant déconnexion desdits dispositifs nœuds, des dispositifs nœuds ayant alors été potentiellement déchus de leur rôle de relais et d'autres ayant alors été potentiellement promus pour jouer le rôle de relais.

Le réseau de communication de la Fig. 1 est qualifié de non-mixte car le dispositif concentrateur 110 et tous les dispositifs nœuds 130 à 140 implémentent le même protocole de communication (par exemple la version 1.3.6 du protocole de communication PRIME mentionné plus haut).

On connaît également des réseaux de communication mixtes (aussi appelés réseaux de communication hétérogènes), implémentés sur un réseau d'alimentation électrique. Ils sont qualifiés de mixtes car tous les dispositifs nœuds n'implémentent pas le même protocole de communication. Par exemple, certains dispositifs nœuds implémentent la version 1.3.6 du protocole de communication PRIME (appelée dans la suite de la description « protocole PRIME 1.3.6 »), tandis que d'autres implémentent la version 1.4 du protocole de communication PRIME (appelée dans la suite de la description « protocole PRIME 1.4 »).

Un tel réseau de communication mixte existe par exemple dans le cadre d'une migration d'un protocole vers un autre (par exemple du protocole PRIME 1.3.6 vers le protocole PRIME 1.4). Par exemple, une migration entre deux types de compteurs d'électricité assure une transition progressive entre une ancienne et une nouvelle technologie de communication (à savoir les protocoles PRIME 1.3.6 et PRIME 1.4 respectivement) dans les réseaux de télérelèves. Cette migration, c'est-à-dire le remplacement des compteurs implémentant le protocole PRIME 1.3.6 (appelés ci-après « compteurs PRIME 1.3.6 ») par des compteurs implémentant le protocole PRIME 1.4 (appelés ci-après « compteurs PRIME 1.4 »), s'effectue en plusieurs étapes qui peuvent durer plusieurs années. A un certain stade de déploiement, on dispose donc d'un réseau mixte composé de deux sous-réseaux : un sous-réseau PRIME 1.4 (comprenant les dispositifs nœuds implémentant le protocole PRIME 1.4) et un sous-réseau PRIME 1.3.6 (comprenant les dispositifs nœuds implémentant le protocole PRIME 1.3.6). Le sous-réseau PRIME 1.3.6 utilise le canal fréquentiel CH1 et le sous-réseau PRIME 1.4 utilise un autre canal fréquentiel (parmi les canaux fréquentiels CH2 à CH8) appartenant à une autre bande fréquentielle. La définition des canaux fréquentiels est donnée par le tableau 1 suivant :

**[Tableau 1]**

| Numéro de canal fréquentiel | Bande de fréquence (KHz) |
|---|---|
| CH1 | 42 - 89 |
| CH2 | 97 - 144 |
| CH3 | 151 - 198 |
| CH4 | 206 - 253 |
| CH5 | 261 - 308 |
| CH6 | 315 - 362 |
| CH7 | 370 - 417 |
| CH8 | 424 - 471 |

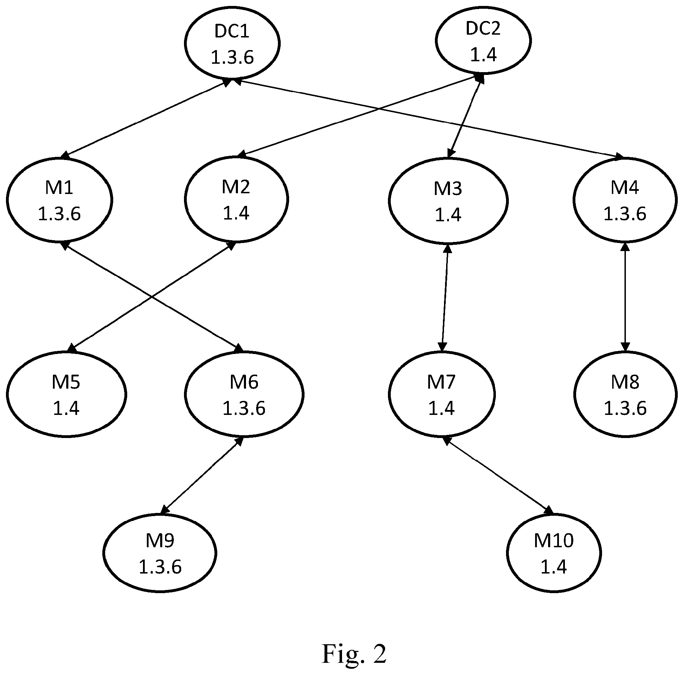

Dans ce contexte de réseau de communication mixte, une première solution connue propose qu'un dispositif concentrateur (DC) dédié à chaque sous-réseau soit installé. En d'autres termes, un dispositif concentrateur PRIME 1.4 (implémentant le protocole PRIME 1.4) et un dispositif concentrateur PRIME 1.3.6 (implémentant le protocole PRIME 1.3.6) sont installés côte à côte dans un poste de transformation. Un inconvénient de la première solution connue est que la présence de deux dispositifs concentrateurs rend difficile la gestion des deux sous-réseaux qui cohabitent ensemble. En outre, dans ce type de réseau mixte comprenant deux sous-réseaux indépendants (possédant chacun un dispositif contrôleur dédié), le pourcentage de compteurs PRIME 1.4 augmente tandis que le pourcentage des compteurs PRIME 1.3.6 diminue. Compte tenu de la nature d'un réseau maillé, la réduction du nombre de compteurs dans un sous-réseau peut avoir pour conséquence que certains compteurs soient isolés et donc incapables de rejoindre le sous-réseau en question. Autrement dit, un autre inconvénient de la première solution connue est que quand le nombre de compteurs d'électricité PRIME 1.3.6 diminue, il est fort probable que certains compteurs PRIME 1.3.6 deviennent injoignables. Ceci est illustré par l'exemple de réseau de communication mixte de la **Fig. 2****,** composé de deux sous-réseaux indépendants : un sous-réseau PRIME 1.3.6 comprenant un dispositif concentrateur PRIME 1.3.6 (DC1) et des compteurs PRIME 1.3.6 (M1, M4, M6, M8 et M9), et un sous-réseau PRIME 1.4 comprenant un dispositif concentrateur PRIME 1.4 (DC2) et des compteurs PRIME 1.4 (M2, M3, M5, M7 et M10). Si le compteur PRIME 1.3.6 M6 est remplacé par un nouveau compteur PRIME 1.4, alors le compteur PRIME 1.3.6 M9 devient un compteur isolé et ne peut plus communiquer avec le dispositif concentrateur DC1.

Dans le contexte de réseau de communication mixte, une deuxième solution connue est la spécification PRIME 1.4, qui a proposé un mécanisme permettant aux compteurs PRIME 1.4 de communiquer avec les compteurs PRIME 1.3.6 dans un même réseau de communication. Cependant, dans ce cas de figure, le réseau de communication est purement un réseau PRIME 1.3.6, dans lequel les compteurs PRIME 1.4 doivent communiquer en respectant les exigences proposées par la spécification PRIME 1.3.6 (comme la bande de fréquence qui est le canal CH1). Un inconvénient de la deuxième solution connue est que les nouveaux compteurs installés, de type PRIME 1.4, ne bénéficient pas des évolutions proposées par l'alliance PRIME et qui sont intégrées dans la spécification PRIME 1.4.

### EXPOSE DE L'INVENTION

Il est proposé un procédé de communication dans un réseau de communication par courants porteurs en ligne, dit réseau de communication CPL, mixte qui est implémenté sur un réseau d'alimentation électrique et qui comprend : un dispositif concentrateur implémentant un premier protocole de communication par courants porteurs en ligne, dit premier protocole de communication CPL ; un ensemble de dispositifs nœuds comprenant un premier sous-ensemble, contenant au moins un premier dispositif nœud implémentant le premier protocole de communication CPL, et un deuxième sous-ensemble, contenant au moins un dispositif nœud implémentant un deuxième protocole de communication par courants porteurs en ligne, dit deuxième protocole de communication CPL ; et au moins un dispositif de traduction de protocole comprenant une circuiterie électronique ; le procédé comprenant un processus de traduction exécuté par la circuiterie électronique du dispositif de traduction de protocole et comprenant :
- dans un premier sens :
   ∘ recevoir une première trame conforme au premier protocole de communication CPL, transmise par un premier équipement de réseau implémentant le premier protocole de communication CPL ;
   ∘ traduire la première trame en une deuxième trame conforme au deuxième protocole de communication CPL ; et
   ∘ transmettre la deuxième trame à un deuxième équipement de réseau implémentant le deuxième protocole de communication CPL ; et
- dans un deuxième sens :
   ∘ recevoir une troisième trame conforme au deuxième protocole de communication CPL, transmise par le deuxième équipement de réseau ;
   ∘ traduire la troisième trame en une quatrième trame conforme au premier protocole de communication CPL ; et
   ∘ transmettre la quatrième trame au premier équipement de réseau.

La solution proposée repose donc sur l'utilisation d'un ou plusieurs dispositifs de traduction de protocole dans un réseau de communication mixte. Le rôle principal de chaque dispositif de traduction de protocole est de garantir la communication entre des dispositifs nœuds (par exemple des compteurs communicants) qui n'implémentent pas tous le même protocole de communication. Pour cela, chaque dispositif de traduction de protocole est configuré pour traduire des trames conformes à un premier protocole de communication en des trames conforme à un deuxième protocole de communication, et vice versa.

Ainsi, la solution proposée garantit la non-perte de communication avec tous les dispositifs nœuds quel que soit le protocole de communication qu'ils implémentent (par exemple PRIME 1.3.6 pour certains et PRIME 1.4 pour d'autres). En d'autres termes, tous les dispositifs nœuds ont la possibilité de se connecter ensemble à un seul réseau de communication. La solution proposée permet donc d'éviter que certains dispositifs nœuds soient isolés et ne puissent plus communiquer avec le dispositif concentrateur. En outre, la solution proposée garantit l'évolutivité et l'efficacité du réseau de communication, en termes de performance, débit et maintenance.

Selon un mode de réalisation particulier, le dispositif concentrateur implémentant le premier protocole de communication CPL est l'unique dispositif concentrateur du réseau de communication CPL mixte.

Ainsi, la présence dans le réseau de communication mixte d'un ou plusieurs dispositifs de traduction de protocole permet aussi de ne nécessiter, dans le réseau de communication mixte, qu'un seul dispositif concentrateur (implémentant le premier protocole de communication, par exemple PRIME 1.4).

Selon un mode de réalisation particulier, le premier équipement de réseau appartient au groupe comprenant : un dispositif nœud du premier sous-ensemble, le dispositif concentrateur et un autre dispositif de traduction de protocole. En outre, le deuxième équipement de réseau appartient au groupe comprenant : un dispositif nœud du deuxième sous-ensemble, un autre dispositif de traduction de protocole et un dispositif nœud de base (BN) configuré pour assurer un interfaçage entre le dispositif concentrateur et un dispositif nœud du deuxième sous-ensemble.

Selon un mode de réalisation particulier, le premier protocole de communication CPL est la version 1.4 du protocole de communication PRIME, pour « PoweRline Intelligent Metering Evolution », et le deuxième protocole de communication CPL est la version 1.3.6 du protocole de communication PRIME.

En d'autres termes, dans ce mode de réalisation, certains dispositifs nœuds implémentent le protocole PRIME 1.3.6 et d'autres le protocole PRIME 1.4, et chaque dispositif de traduction de protocole permet de recevoir des trames PRIME 1.3.6 sur le canal fréquentiel CH1, les traduire en des trames PRIME 1.4 et d'envoyer ces trames PRIME 1.4 sur le canal fréquentiel CHn (où n est un entier naturel compris dans la plage [2, 8]), et vice versa. Ce mode de réalisation s'applique par exemple dans le cadre d'une migration des dispositifs nœuds du protocole de communication PRIME 1.3.6 vers le protocole de communication PRIME 1.4. La présente invention n'est cependant pas limitée à une mixité entre ces deux protocoles de communication, mais s'applique à tout type de réseau de communication mixte implémenté sur un réseau d'alimentation électrique.

Selon un mode de réalisation particulier, les dispositifs nœuds sont des compteurs communicants.

Selon un mode de réalisation particulier, le procédé comprend en outre un processus de répétition, exécuté par la circuiterie électronique du dispositif de traduction de protocole et comprenant :
- recevoir une cinquième trame conforme au premier, respectivement deuxième, protocole de communication CPL, transmise par un troisième équipement de réseau implémentant le premier, respectivement deuxième, protocole de communication CPL ; et
- transférer la cinquième trame à un quatrième équipement de réseau implémentant le premier, respectivement deuxième, protocole de communication CPL.

Ainsi, avec cette fonctionnalité de répéteur, le dispositif de traduction de protocole permet d'augmenter la portée du réseau de communication mixte implémenté sur un réseau d'alimentation électrique (réseau de communication par courants porteurs en ligne, CPL).

Selon un mode de réalisation particulier, le procédé comprend en outre un processus d'enregistrement, exécuté par la circuiterie électronique du dispositif de traduction de protocole et comprenant:
- écouter sur un premier canal de communication, pour détecter la réception d'une trame de type balise conforme au premier protocole de communication CPL, et sur un deuxième canal de communication, pour détecter la réception d'une trame de type balise conforme au deuxième protocole de communication CPL ;
- en fonction des trames de type balise effectivement reçues, décider d'un enregistrement du dispositif de traduction de protocole sur le réseau de communication CPL mixte comme suit :
   ∘ si une trame de type balise est reçue sur le premier canal de communication et aucune trame de type balise n'est reçue sur le deuxième canal de communication, enregistrement sur le réseau de communication CPL mixte en utilisant une première interface de communication, conforme au premier protocole de communication CPL, du dispositif de traduction de protocole ;
   ∘ si une trame de type balise est reçue sur le deuxième canal de communication et aucune trame de type balise n'est reçue sur le premier canal de communication, enregistrement sur le réseau de communication CPL mixte en utilisant une deuxième interface de communication, conforme au deuxième protocole de communication CPL, du dispositif de traduction de protocole ;
   ∘ si une trame de type balise est reçue sur le premier canal de communication et une autre trame de type balise est reçue sur le deuxième canal de communication, enregistrement sur le réseau de communication CPL mixte en utilisant une des première et deuxième interfaces de communication, choisie en fonction d'un critère de sélection prédéterminé ; et
   ∘ si aucune trame de type balise n'est reçue sur les premier et deuxième canaux de communication, envoi d'une première trame de type demande de promotion, en utilisant la première interface de communication, et d'une deuxième trame de type demande de promotion, en utilisant la deuxième interface de communication.

Selon un mode de réalisation particulier, le procédé comprend en outre un processus de promotion, exécuté par la circuiterie électronique du dispositif de traduction de protocole et comprenant :
- écouter sur un premier canal de communication, pour détecter la réception d'une trame de type demande de promotion conforme au premier protocole de communication CPL, et sur un deuxième canal de communication, pour détecter la réception d'une trame de type demande de promotion conforme au deuxième protocole de communication CPL;
- si une trame de type demande de promotion est effectivement reçue sur au moins un des premier et deuxième canaux de communication, transmettre une demande de promotion via une interface de communication avec laquelle le dispositif de traduction de protocole s'est enregistré sur le réseau de communication CPL mixte ;
- si le dispositif de traduction de protocole passe dans un état de commutateur, envoyer une première trame de type balise, en utilisant une première interface de communication conforme au premier protocole de communication CPL, et une deuxième trame de type balise, en utilisant une deuxième interface de communication conforme au deuxième protocole de communication CPL.

Il est aussi proposé un produit programme d'ordinateur, comportant des instructions entraînant l'exécution, par un processeur, du procédé évoqué ci-dessus selon l'un quelconque de ses modes de réalisation, lorsque lesdites instructions sont exécutées par le processeur.

Il est aussi proposé un support de stockage, stockant de telles instructions.

Il est aussi proposé un dispositif de traduction de protocole, configuré pour être utilisé dans un réseau de communication par courants porteurs en ligne, dit réseau de communication CPL, mixte qui est implémenté sur un réseau d'alimentation électrique et qui comprend : un dispositif concentrateur implémentant un premier protocole de communication par courants porteurs en ligne, dit premier protocole de communication CPL ; un ensemble de dispositifs nœuds comprenant un premier sous-ensemble, contenant au moins un premier dispositif nœud implémentant le premier protocole de communication CPL, et un deuxième sous-ensemble, contenant au moins un dispositif nœud implémentant un deuxième protocole de communication par courants porteurs en ligne, dit deuxième protocole de communication CPL ; ledit dispositif de traduction de protocole comprenant une circuiterie électronique configurée pour exécuter le procédé évoqué ci-dessus selon l'un quelconque de ses modes de réalisation.

Il est aussi proposé un réseau de communication par courants porteurs en ligne, dit réseau de communication CPL, mixte, implémenté sur un réseau d'alimentation électrique et comprenant :
- un dispositif concentrateur implémentant un premier protocole de communication CPL ;
- un ensemble de dispositifs nœuds comprenant un premier sous-ensemble, contenant au moins un premier dispositif nœud implémentant le premier protocole de communication CPL, et un deuxième sous-ensemble, contenant au moins un dispositif nœud implémentant un deuxième protocole de communication ; et
- au moins un dispositif de traduction de protocole tel qu'évoqué ci-dessus.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un réseau de communication non-mixte, implémenté sur un réseau d'alimentation électrique, selon l'état de la technique ;
[Fig. 2] illustre schématiquement un réseau de communication mixte, implémenté sur un réseau d'alimentation électrique, selon l'état de la technique ;
[Fig. 3] illustre schématiquement un réseau de communication mixte, implémenté sur un réseau d'alimentation électrique, selon un mode de réalisation de l'invention ;
[Fig. 4] illustre schématiquement un dispositif de traduction de protocole, selon un mode de réalisation de l'invention ;
[Fig. 5] illustre schématiquement un exemple d'architecture logicielle d'un dispositif de traduction de protocole, selon un mode de réalisation de l'invention ;
[Fig. 6] illustre schématiquement un exemple d'architecture matérielle d'un dispositif de traduction de protocole, selon un mode de réalisation de l'invention ;
[Fig. 7] illustre schématiquement un algorithme de traduction exécuté par un dispositif de traduction de protocole, selon un mode de réalisation de l'invention ;
[Fig. 8] illustre schématiquement un algorithme de répétition exécuté par un dispositif de traduction de protocole, selon un mode de réalisation de l'invention ;
[Fig. 9] illustre schématiquement les états fonctionnels d'un dispositif de traduction de protocole, selon un mode de réalisation de l'invention ;
[Fig. 10] illustre schématiquement un algorithme de gestion des états fonctionnels d'un dispositif de traduction de protocole, selon un mode de réalisation de l'invention ;
[Fig. 11] illustre schématiquement un algorithme d'enregistrement d'un dispositif de traduction de protocole, selon un mode de réalisation de l'invention ;
[Fig. 12] illustre schématiquement le process d'enregistrement du dispositif de traduction de protocole DTP3 de la Fig. 3, selon un mode de réalisation de l'invention ;
[Fig. 13] illustre schématiquement le process d'enregistrement du dispositif de traduction de protocole DTP4 de la Fig. 3, selon un mode de réalisation de l'invention ;
[Fig. 14] illustre schématiquement un algorithme de promotion d'un dispositif de traduction de protocole, selon un mode de réalisation de l'invention ;
[Fig. 15] illustre schématiquement le process de promotion du dispositif de traduction de protocole DTP3 de la Fig. 3, selon un mode de réalisation de l'invention ;
[Fig. 16] illustre schématiquement le process de promotion du dispositif de traduction de protocole DTP4 de la Fig. 3, selon un mode de réalisation de l'invention ; et
[Fig. 17] illustre une partie du réseau de communication mixte de la Fig. 3, et les niveaux de réseau qui composent cette partie de réseau.

### EXPOSE DETAILLE DE MODES DE REALISATION

Il est proposé un procédé de communication dans un réseau de communication mixte qui est implémenté (déployé) sur un réseau d'alimentation électrique et qui comprend un dispositif concentrateur, une pluralité de dispositifs nœuds (qui n'implémentent pas tous le même protocole de communication) et un ou plusieurs dispositifs de traduction de protocole (aussi parfois appelés DTP dans la suite de la description). La topologie logique du réseau de communication est sous forme d'arbre, c'est-à-dire hiérarchique à partir du dispositif concentrateur qui constitue un dispositif racine.

La description qui suit détaille des modes de réalisation dans le cadre d'un réseau de communication mixte utilisé afin de mettre en œuvre des services de type AMM. En d'autres termes, les dispositifs nœuds sont des compteurs communicants, aussi appelés compteurs intelligents (ou « smart meters » en anglais). Il convient toutefois de noter que la présente invention s'applique à tout réseau de communication implémenté sur un réseau d'alimentation électrique et comportant un dispositif concentrateur et une pluralité de dispositifs nœuds.

### Exemple de réseau mixte comprenant des DTPs

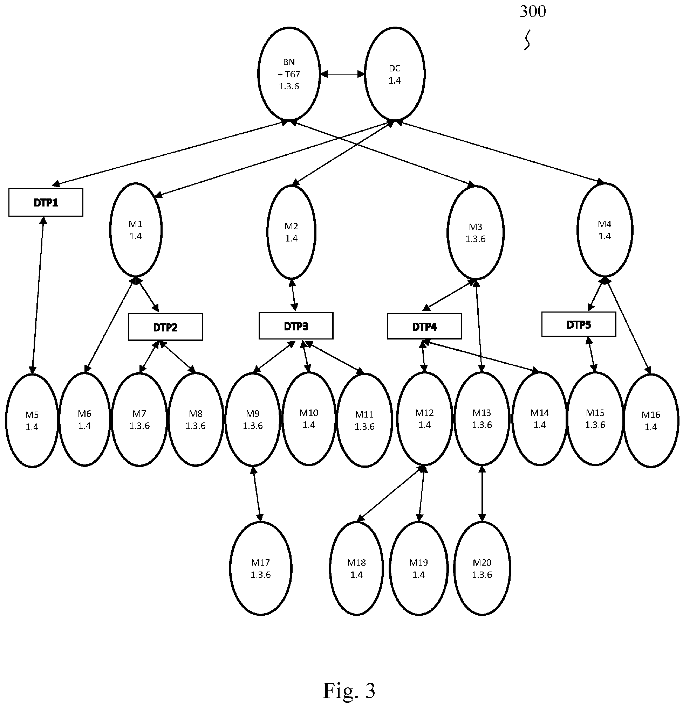

La **Fig. 3** illustre schématiquement un réseau de communication mixte 300, implémenté sur un réseau d'alimentation électrique, selon un mode de réalisation de l'invention. Le réseau de communication mixte 300 comprend :
- un unique dispositif concentrateur PRIME 1.4 (référencé DC) ;
- un dispositif nœud de base (référencé BN, pour Base Node) implémentant le protocole PRIME 1.3.6 et supportant les fonctionnalités de Ticket 67 (c'est une extension de la couche transport TCP (« Transmission Control Protocol » en anglais) pour DLMS (« Device Language Message Specification » en anglais), qui assure une communication TCP sur liaison Ethernet). En d'autres termes, c'est un dispositif nœud de base PRIME 1.3.6 capable d'assurer l'interfaçage entre un compteur PRIME 1.3.6 et le dispositif concentrateur PRIME 1.4 (DC) ;
- onze compteurs PRIME 1.4 (référencés M1, M2, M4, M5, M6, M10, M12, M14, M16, M18 et M19) ;
- neuf compteurs PRIME 1.3.6 (référencés M3, M7, M8, M9, M11, M13, M15, M17 et M20) ; et
- cinq dispositifs de traduction de protocole (référencés DTP1, DTP2, DTP3, DTP4 et DTP5).

Les quatre dispositifs de traduction de protocole DTP1, DTP2, DTP4 et DTP5 jouent le rôle d'un traducteur de protocole (mais pas celui d'un répéteur).

Le dispositif de traduction DTP1 reçoit des trames PRIME 1.4 envoyées par le compteur PRIME 1.4 M5, et les traduit en trames PRIME 1.3.6 qu'il envoie au dispositif nœud de base BN. Inversement, il reçoit des trames PRIME 1.3.6 envoyées par le dispositif nœud de base BN, et les traduit en trames PRIME 1.4 qu'il envoie au compteur PRIME 1.4 M5.

Le dispositif de traduction DTP2 reçoit des trames PRIME 1.3.6 envoyées par les compteurs PRIME 1.3.6 M7 et M8, et les traduit en trames PRIME 1.4 qu'il envoie au compteur PRIME 1.4 M1. Inversement, il reçoit des trames PRIME 1.4 envoyées par le compteur PRIME 1.4 M1, et les traduit en trames PRIME 1.3.6 qu'il envoie aux compteurs PRIME 1.3.6 M7 et M8.

Le dispositif de traduction DTP4 reçoit des trames PRIME 1.4 envoyées par les compteurs PRIME 1.4 M12 et M14, et les traduit en trames PRIME 1.3.6 qu'il envoie au compteur PRIME 1.3.6 M3. Inversement, il reçoit des trames PRIME 1.3.6 envoyées par le compteur PRIME 1.3.6 M3, et les traduit en trames PRIME 1.4 qu'il envoie aux compteurs PRIME 1.3.6 M12 et M14.

Le dispositif de traduction DTP5 reçoit des trames PRIME 1.3.6 envoyées par le compteur PRIME 1.3.6 M15, et les traduit en trames PRIME 1.4 qu'il envoie au compteur PRIME 1.4 M4. Inversement, il reçoit des trames PRIME 1.4 envoyées par le compteur PRIME 1.4 M4, et les traduit en trames PRIME 1.3.6 qu'il envoie au compteur PRIME 1.3.6 M15.

Outre le rôle de traducteur de protocole, le dispositif de traduction DTP3 joue le rôle de répéteur. Dans le rôle de traducteur, il reçoit des trames PRIME 1.3.6 envoyées par les compteurs PRIME 1.3.6 M9 et M11, et les traduit en trames PRIME 1.4 qu'il envoie au compteur PRIME 1.4 M2 ; inversement, il reçoit des trames PRIME 1.4 envoyées par le compteur PRIME 1.4 M2, et les traduit en trames PRIME 1.3.6 qu'il envoie aux compteurs PRIME 1.3.6 M9 et M11. Dans le rôle de répéteur, il reçoit des trames PRIME 1.4 envoyées par le compteurs PRIME 1.4 M10, et les transfère (sans traduction) vers le compteur PRIME 1.4 M2 ; inversement, il reçoit des trames PRIME 1.4 envoyées par le compteur PRIME 1.4 M2, et les transfère (sans traduction) vers le compteur PRIME 1.4 M10.

Comme détaillé par la suite, chaque dispositif de traduction doit tout d'abord rejoindre le réseau de communication mixte 300 (c'est-à-dire s'y enregistrer) pour devenir un élément actif afin d'assurer son rôle principal, qui est la traduction de trames, et éventuellement son rôle secondaire, qui est la répétition de trames. Le dispositif concentrateur DC dispose d'une information sur le type de chaque nœud du réseau de communication mixte 300 : compteur PRIME 1.4, compteur PRIME 1.3.6, nœud de base BN ou dispositif de traduction de protocole.

### Exemple d'architecture d'un DTP

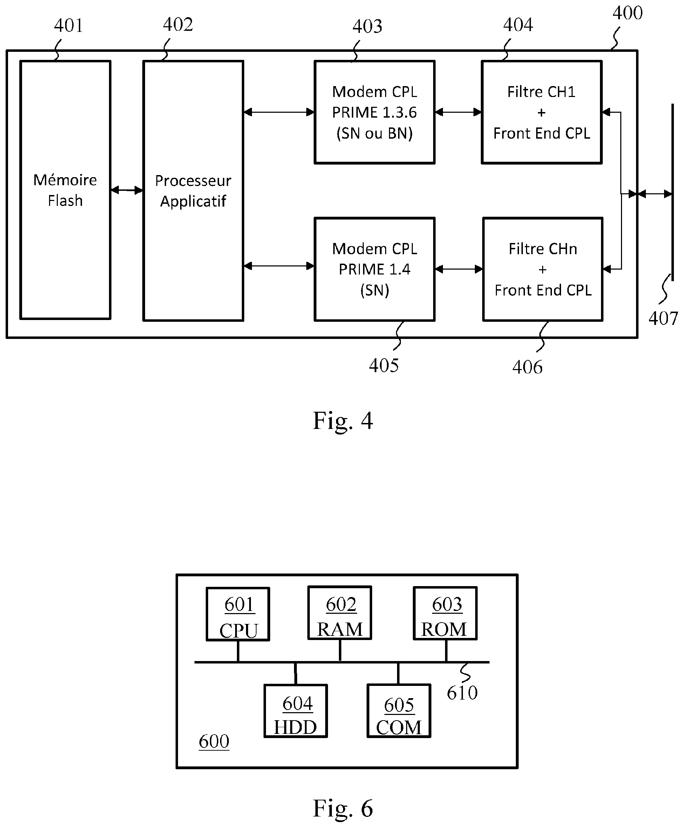

La **Fig. 4** illustre schématiquement un dispositif de traduction de protocole (DTP), référencé 400, selon un mode de réalisation de l'invention. Il comprend :
- une mémoire flash 401, stockant des programmes (aussi appelés logiciels), notamment un logiciel applicatif et les logiciels des couches basses de deux piles protocolaires PRIME 1.3.6 et PRIME 1.4 ;
- un processeur applicatif 402, relié à la mémoire flash 401 pour lire et exécuter les programmes qui y sont stockés, afin notamment de gérer les états fonctionnels du dispositif de traduction de protocole et de décider, en fonction des trames reçues, celles qui seront ignorées, celles qui seront traduites et celles qui seront transférées sans traduction ;
- deux modems CPL reliés au processeur applicatif 402 : l'un référencé 403 intégrant les couches basses de la pile protocolaire PRIME 1.3.6 (version nœud de service (SN pour « Service Node » en anglais) ou nœud de base (BN pour « Base Node » en anglais)), l'autre référencé 405 intégrant les couches basses de la pile protocolaire PRIME 1.4 (version SN uniquement) ; et
- deux blocs, référencés 404 et 406, assurant chacun une fonction de filtre passe-bande et d'interface (« front-end » en anglais) avec une ligne de transmission CPL référencée 407 : celui référencé 404 est relié au modem CPL 403 et opère dans la bande fréquentielle CH1 pour le protocole PRIME 1.3.6, celui référencé 406 est relié au modem CPL 405 et opère dans la bande fréquentielle CHn (où n est un entier naturel compris dans la plage [2, 8]) pour le protocole PRIME 1.4.

### Exemple de pile protocolaire d'un DTP

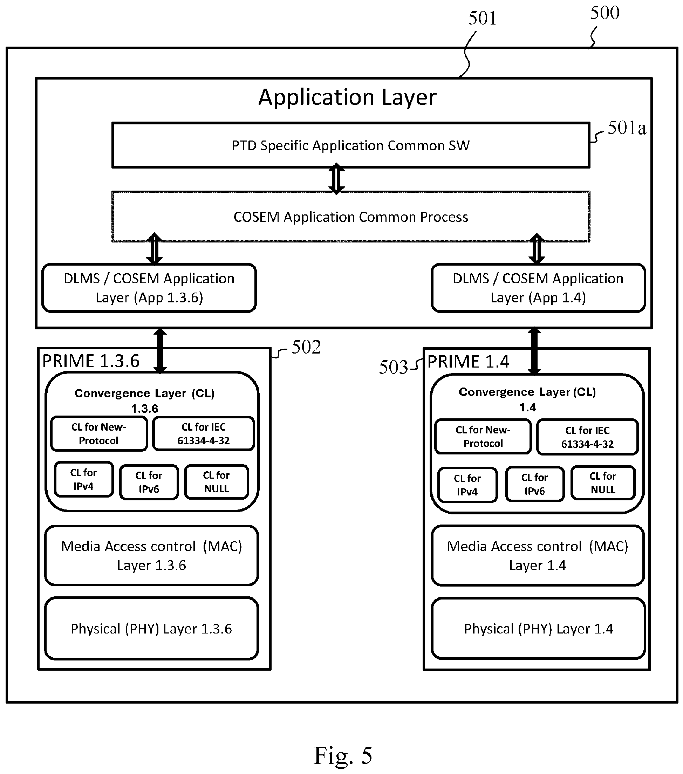

La **Fig. 5** illustre schématiquement un exemple d'architecture logicielle (pile protocolaire ou « protocol stack » en anglais) 500 d'un dispositif de traduction de protocole (DTP), selon un mode de réalisation de l'invention. L'architecture logicielle comprend une couche application 501, un bloc 502 pour les couches basses de la pile protocolaire PRIME 1.3.6 et un bloc 503 pour les couches basses de la pile protocolaire PRIME 1.4.

Dans la couche application 501, exécutée par le processeur applicatif 402, le dispositif de traduction de protocole (DTP) dispose d'un logiciel spécifique 501a commun aux deux modem CPL 403 et 405 (intégrant les couches basses des piles protocolaires PRIME 1.3.6 et PRIME 1.4 respectivement). Son rôle est de :
- gérer les états du DTP à travers les différentes procédures : envoi de trames de type de demande de promotion (ou PNPDU pour « Promotion Needed Protocol Data Unit » en anglais), rejoindre le réseau, promotion, envoyer des trames de type balise (« BEACONs » en anglais), le mécanisme de « keep-alive », etc. ;
- gérer les trames reçues pour identifier les trames ignorées, les trames transmises sans traduction et les trames transmises après traduction, et identifier l'interface à utiliser pour chaque communication (CH1 pour PRIME 1.3.6 et CHn pour PRIME 1.4 où n est un entier naturel compris dans la plage [2, 8]) ; et
- communiquer au dispositif concentrateur DC certains événements spécifiques liés aux états du DTP. Par exemple : le DTP est en état « Terminal » pendant une certaine durée, le DTP utilise un seul protocole pour communiquer, etc.

Au niveau des couches basses, le DTP dispose de deux blocs (« sous-stacks ») différents, exécutés par les modems CPL 403 et 405 respectivement : le bloc 502 pour les couches basses de la pile protocolaire PRIME 1.3.6 et le bloc 503 pour les couches basses de la pile protocolaire PRIME 1.4. Chacun de ces deux blocs exploite un canal fréquentiel différent en utilisant les lignes d'énergie comme support de transmission.

### Exemple d'architecture matérielle d'un DTP

La **Fig. 6** illustre schématiquement un exemple d'architecture matérielle 600 d'un dispositif de traduction de protocole (DTP), selon un mode de réalisation de l'invention. Cette architecture matérielle 600 comprend, reliés par un bus de communication 610 : un processeur ou CPU (« Central Processing Unit » en anglais) 601 ; une mémoire vive RAM (« Random Access Memory » en anglais) 602 ; une mémoire morte ROM (« Read Only Memory » en anglais) 603, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 604 ; et au moins une interface de communication 605.

Le processeur 601 est capable d'exécuter des instructions chargées dans la RAM 602 à partir de la ROM 603, d'une mémoire externe (non représentée), d'un support de stockage, tel qu'une carte SD, ou d'un réseau de communication (non représenté). Lorsque le de traduction de protocole est mis sous tension, le processeur 601 est capable de lire de la RAM 602 des instructions et de les exécuter. Ces instructions forment un programme d'ordinateur causant la mise en œuvre, par le processeur 601, des comportements, étapes et algorithme décrits ici pour un dispositif de traduction de protocole.

Tout ou partie des comportements, étapes et algorithme décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le dispositif de traduction de protocole comprend de la circuiterie électronique agencée et configurée pour implémenter les comportements, étapes et algorithmes décrits ici pour un tel dispositif de traduction de protocole.

Dans un mode de réalisation, le dispositif concentrateur DC possède une architecture matérielle identique à celle 600 d'un dispositif de traduction de protocole. D'une manière générale, le dispositif concentrateur comprend de la circuiterie électronique agencée et configurée pour implémenter les comportements, étapes et algorithmes décrits ici pour un tel dispositif concentrateur.

### Fonction de traduction d'un DTP

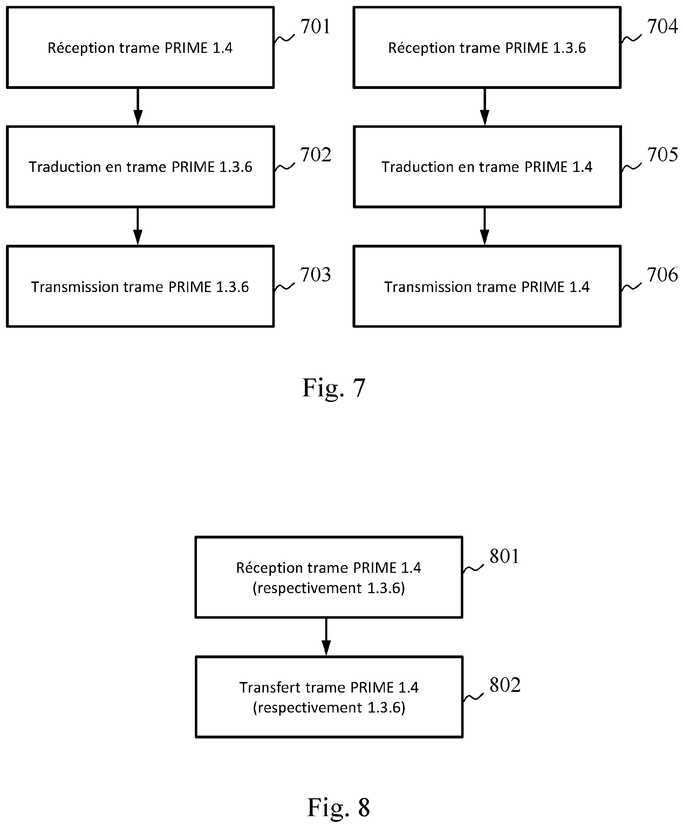

La **Fig.** 7 illustre schématiquement un algorithme de traduction exécuté par un dispositif de traduction de protocole (DTP), selon un mode de réalisation de l'invention.

Dans un premier sens : dans une étape 701, le DTP reçoit une première trame conforme au protocole PRIME 1.4, transmise par un premier équipement de réseau implémentant le protocole PRIME 1.4 ; puis dans une étape 702, le DTP traduit la première trame en une deuxième trame conforme au protocole PRIME 1.3.6 ; et enfin dans une étape 703, le DTP transmet la deuxième trame à un deuxième équipement de réseau implémentant le protocole PRIME 1.3.6.

Dans un deuxième sens : dans une étape 704, le DTP reçoit une troisième trame conforme au protocole PRIME 1.3.6, transmise par le deuxième équipement de réseau ; puis dans une étape 705, le DTP traduit la troisième trame en une quatrième trame conforme au protocole PRIME 1.4 ; et enfin dans une étape 706, le DTP transmet la quatrième trame au premier équipement de réseau.

Le premier équipement de réseau est par exemple un compteur PRIME 1.4 (dispositif nœud du premier sous-ensemble), le dispositif concentrateur DC ou un autre dispositif de traduction de protocole (DTP). Le deuxième équipement de réseau est par exemple un compteur PRIME 1.3.6 (dispositif nœud du deuxième sous-ensemble), un autre dispositif de traduction de protocole (DTP) ou le dispositif nœud de base (BN) (qui est configuré pour assurer un interfaçage entre le dispositif concentrateur DC et un compteur PRIME 1.3.6).

### Fonction de répétition d'un DTP

La **Fig. 8** illustre schématiquement un algorithme de répétition exécuté par un dispositif de traduction de protocole (DTP), selon un mode de réalisation de l'invention.

Dans une étape 801, le DTP reçoit une cinquième trame conforme à un protocole de communication donné (protocole PRIME 1.4 ou protocole PRIME 1.3.6), transmise par un troisième équipement de réseau implémentant ce protocole de communication donné. Puis, dans une étape 802, le DTP transfère la cinquième trame à un quatrième équipement de réseau implémentant également le protocole de communication donné.

Chacun des troisième et quatrième équipements de réseau est par exemple un compteur (PRIME 1.4 ou PRIME 1.3.6) ou un autre dispositif de traduction de protocole (DTP).

### Exemple d'états fonctionnels d'un DTP

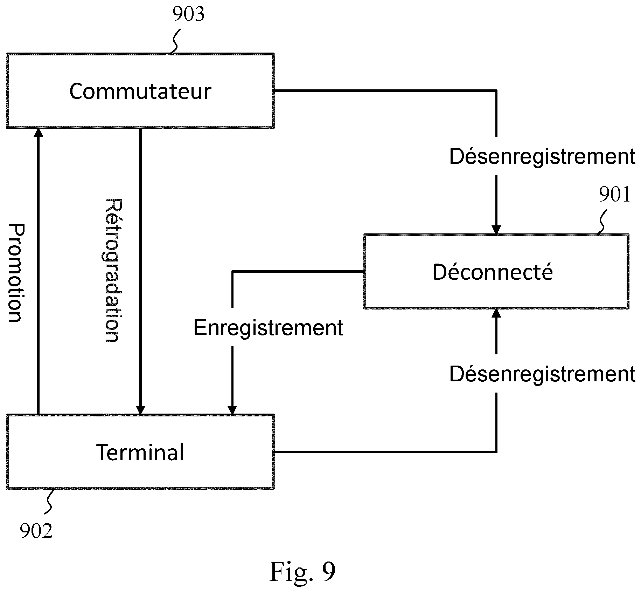

La **Fig. 9** illustre schématiquement les états fonctionnels d'un dispositif de traduction de protocole (DTP), selon un mode de réalisation de l'invention.

Comme les compteurs PRIME (1.3.6 ou 1.4), les trois états fonctionnels d'un DTP sont « Déconnecté », « Terminal » et « Commutateur » :
- état « Déconnecté » : il s'agit de l'état fonctionnel initial d'un DTP. Lorsqu'il est déconnecté, le DTP n'est pas en mesure de communiquer des données ou de changer les données avec d'autres compteurs ou d'autres DTPs ; sa fonction principale est de rechercher un sous-réseau à sa portée et d'essayer de s'y inscrire ;
- état « Terminal » : lorsqu'il se trouve dans cet état fonctionnel, un DTP peut établir des connexions et communiquer des données, mais il n'est pas en mesure de commuter les données d'autres compteurs PRIME 1.3.6 ou PRIME 1.4 ; et
- état « Commutateur » : lorsqu'il se trouve dans cet état fonctionnel, un DTP est capable de transférer des données vers et depuis d'autres compteurs du même sous-réseau. C'est un point de branchement sur l'arborescence. Dans cet état, le DTP assure parfaitement son rôle principal qui est la traduction des trames reçues, de PRIME 1.3.6 vers PRIME 1.4 et vice versa.

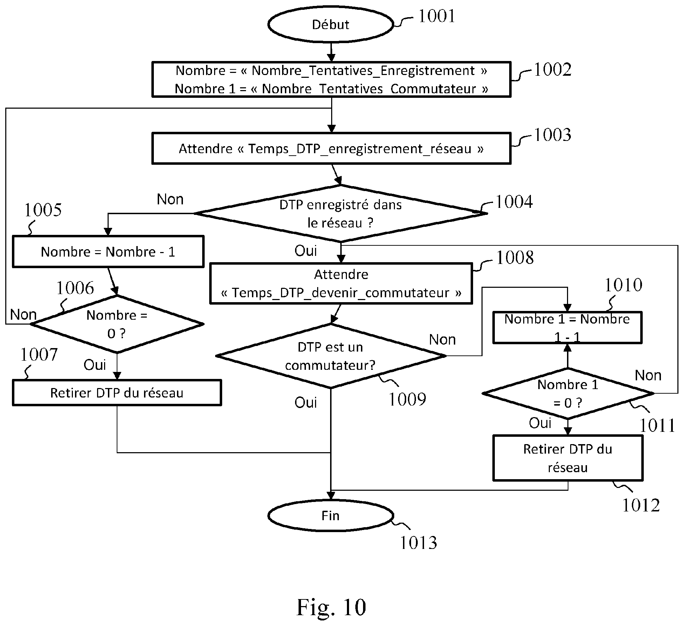

La **Fig. 10** illustre schématiquement un algorithme de gestion des états fonctionnels d'un dispositif de traduction de protocole (DTP), selon un mode de réalisation de l'invention. Cet algorithme est exécuté par le dispositif concentrateur DC. L'idée est de retirer un DTP qui n'arrive pas à rejoindre le réseau de communication après un certain moment ou un DTP qui arrive à rejoindre le réseau mais qui est toujours dans l'état « Terminal » pendant une durée bien définie. En effet, le rôle principal d'un DTP est correctement assuré seulement si le DTP est dans l'état « Commutateur ». On peut également retirer du réseau de communication les DTPs qui n'utilisent qu'une seule interface de communication (PRIME 1.3.6 ou PRIME 1.4) et donc n'assurent pas le rôle principal qui est la traduction de protocole.

Deux paramètres sont utilisés pour gérer le contrôle de la durée pendant laquelle le DTP essaye de rejoindre le réseau : « Nombre_Tentatives_Enregistrement » et « Temps_DTP_enregistrement_réseau ». Deux autres paramètres sont utilisés pour contrôler la durée pour que le DTP passe dans l'état « Commutateur » : « Nombre_Tentatives_Commutateur » et « Temps_DTP_devenir_commutateur ».

Dans une étape 1002, qui suit l'étape de début 1001, le dispositif concentrateur initialise une variable « Nombre » avec la valeur du paramètre « Nombre _Tentatives_Enregistrement » et une variable « Nombre 1 » avec la valeur du paramètre « Nombre_Tentatives_Commutateur ».

Puis, dans une étape 1003, le dispositif concentrateur attend pendant la valeur de durée du paramètre « Temps_DTP_enregistrement_réseau », puis passe à l'étape 1004 dans laquelle il vérifie si le DTP est enregistré dans le réseau (c'est-à-dire est dans l'état « Terminal »).

Si le DTP n'est pas enregistré dans le réseau, le dispositif concentrateur passe à l'étape 1005 dans laquelle il décrémente la variable « Nombre » d'une unité, puis à l'étape 1006 dans laquelle il vérifie si la variable « Nombre » est égale à « 0 ». Si la variable « Nombre » n'est pas égale à « 0 », le dispositif concentrateur revient à l'étape 1003, sinon il passe à l'étape 1007 dans laquelle il retire le DTP du réseau de communication.

Si le DTP est enregistré dans le réseau, le dispositif concentrateur passe à l'étape 1008 dans laquelle il attend pendant la valeur de durée du paramètre « Temps_DTP_devenir_commutateur », puis à l'étape 1009 dans laquelle il vérifie si le DTP est passé dans l'état « Commutateur ». Si le DTP est passé dans l'état « Commutateur », le dispositif concentrateur passe à l'étape de fin 1013, sinon il passe à l'étape 1010 dans laquelle il décrémente la variable « Nombre 1 » d'une unité, puis à l'étape 1011 dans laquelle il vérifie si la variable « Nombre 1 » est égale à « 0 ». Si la variable « Nombre 1 » n'est pas égale à « 0 », le dispositif concentrateur revient à l'étape 1008, sinon il passe à l'étape 1012 dans laquelle il retire le DTP du réseau de communication.

### Exemple de processus d'enregistrement d'un DTP

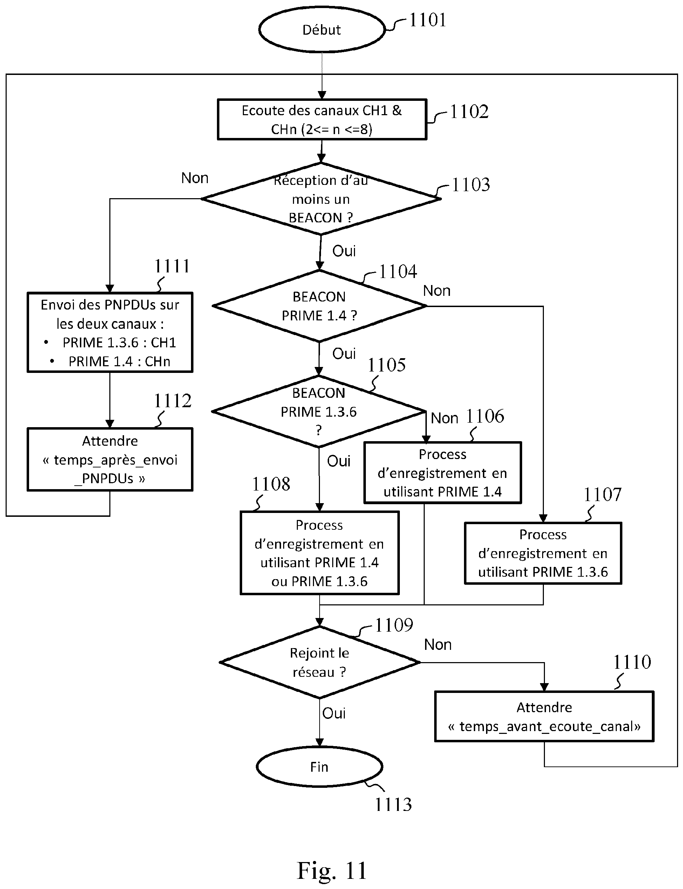

La **Fig. 11** illustre schématiquement un algorithme d'enregistrement d'un dispositif de traduction de protocole DTP, selon un mode de réalisation de l'invention. Cet algorithme est géré par la couche application 501 qui est exécutée par le processeur applicatif 402. On rappelle que pour assurer la fonction de traduction de protocole (et éventuellement la fonction de répétition), le dispositif de traduction de protocole DTP doit tout d'abord s'enregistrer dans (c'est-à-dire rejoindre) le réseau de communication mixte.

Dans une étape 1102, qui suit l'étape de début 1101, le dispositif de traduction de protocole écoute sur le canal de communication CH1, pour détecter la réception d'une trame de type balise (Beacon) conforme au protocole de communication PRIME 1.3.6, et sur le canal de communication CHn, où n est un entier naturel compris dans la plage [2, 8], pour détecter la réception d'une trame de type balise (Beacon) conforme au protocole de communication PRIME 1.4.

Puis, dans une étape 1103, le dispositif de traduction de protocole vérifie si au moins une trame de type balise a été reçue sur les canaux CH1 et CHn.

Si aucune trame de type balise n'a été reçue sur les canaux de communication CH1 et CHn, le dispositif de traduction passe à l'étape 1109 dans laquelle il envoie une trame PNPDU sur le canal CH1, en utilisant une interface de communication PRIME 1.3.6, et une autre trame PNPDU sur le canal CHn, en utilisant une interface de communication PRIME 1.4. Puis il exécute l'étape 1110, dans laquelle il attend pendant la valeur de durée d'un paramètre « temps_après_envoi_PNPDUs », avant de revenir à l'étape 1102.

Si au moins une trame de type balise a été reçue sur les canaux CH11 et CHn, le dispositif de traduction de protocole passe à l'étape 1104 dans laquelle il vérifie si une trame de type balise PRIME 1.4 a été reçue sur le canal CHn. Si une trame de type balise PRIME 1.4 a été reçue sur le canal CHn, le dispositif de traduction de protocole passe à l'étape 1104 dans laquelle il vérifie si une trame de type balise PRIME 1.3.6 a été reçue sur le canal CH1.

Si une trame de type balise PRIME 1.4 a été reçue sur le canal CHn (réponse « Oui » à l'étape test 1104) et si une trame de type balise PRIME 1.3.6 a été reçue sur le canal CH1 (réponse « Oui » à l'étape test 1105), le dispositif de traduction de protocole passe à l'étape 1108 dans laquelle il lance un process d'enregistrement sur le réseau de communication mixte en utilisant une des interfaces de communication PRIME 1.4 et PRIME 1.3.6, choisie en fonction d'un critère de sélection prédéterminé (par exemple choix de l'interface ayant la meilleure qualité de canal de transmission). L'autre interface de communication sera en mode veille.

Si une trame de type balise PRIME 1.4 a été reçue sur le canal CHn (réponse « Oui » à l'étape test 1104) et si aucune trame de type balise PRIME 1.3.6 n'a été reçue sur le canal CH1 (réponse « Non » à l'étape test 1105), le dispositif de traduction de protocole passe à l'étape 1106 dans laquelle il lance le process d'enregistrement sur le réseau de communication mixte en utilisant l'interface de communication PRIME 1.4. L'autre interface de communication (interface PRIME 1.3.6) sera en mode veille.

Si aucune trame de type balise PRIME 1.4 n'a été reçue sur le canal CHn (réponse « Non » à l'étape test 1104), ce qui signifie qu'une trame de type balise PRIME 1.3.6 a été reçue sur le canal CH1 (puisque le résultat de l'étape test 1104 indique qu'au moins une trame de type balise a été reçue sur les canaux CH1 et CHn), le dispositif de traduction de protocole passe à l'étape 1107 dans laquelle il lance le process d'enregistrement sur le réseau de communication mixte en utilisant l'interface de communication PRIME 1.3.6. L'autre interface de communication (interface PRIME 1.4) sera en mode veille.

Chacune des étapes 1106, 1107 et 1108 est suivie de l'étape 1109 dans laquelle le dispositif de traduction vérifie si l'enregistrement a abouti, c'est-à-dire si le dispositif de traduction a rejoint le réseau de communication mixte. Si l'enregistrement n'a pas abouti, le dispositif de traduction de protocole passe à l'étape 1110 dans laquelle il attend pendant la valeur de durée d'un paramètre « temps_avant_écoute_canal », avant de revenir à l'étape 1102. Si l'enregistrement a abouti, le dispositif de traduction de protocole passe à l'étape de fin 1113.

On décrit maintenant plus en détail, à travers deux exemples (pour les dispositifs de traduction de protocole DTP3 et DTP4 respectivement) le process d'enregistrement sur le réseau de communication mixte.

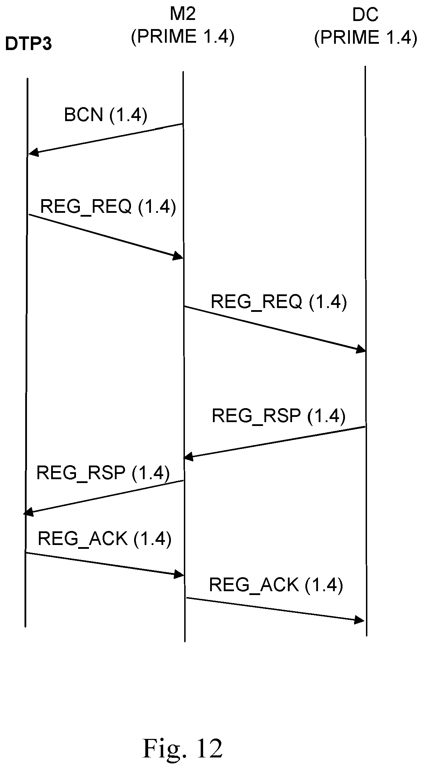

La **Fig. 12** illustre schématiquement le process d'enregistrement du dispositif de traduction de protocole DTP3 de la Fig. 3, selon un mode de réalisation de l'invention. On rappelle que le dispositif de traduction de protocole DTP3 doit passer par le compteur M2 de type PRIME 1.4 pour communiquer avec le dispositif concentrateur DC de type PRIME 1.4. On détaille maintenant les étapes successives. Le compteur M2 envoie une trame de balise BCN au dispositif de traduction de protocole DTP3. Le dispositif de traduction de protocole DTP3 envoie une requête REG_REQ au compteur M2, qui la fait suivre au dispositif concentrateur DC. En retour, le dispositif concentrateur DC envoie une trame de réponse REG_RESP au compteur M2, qui la fait suivre au dispositif de traduction de protocole DTP3. Enfin, le dispositif de traduction de protocole DTP3 envoie une requête d'acquittement REG_ACK au compteur M2, qui la fait suivre au dispositif concentrateur DC.

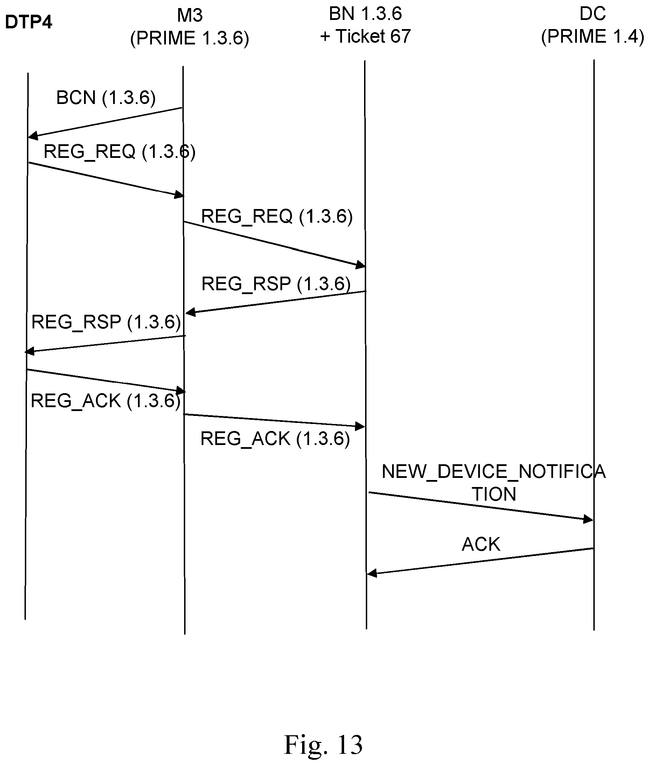

La **Fig. 13** illustre schématiquement le process d'enregistrement du dispositif de traduction de protocole DTP4 de la Fig. 3, selon un mode de réalisation de l'invention. On rappelle que le dispositif de traduction de protocole DTP4 doit passer par le compteur M3 de type PRIME 1.3.6 et le dispositif nœud de base BN de type PRIME 1.3.6 pour communiquer avec le dispositif concentrateur DC de type PRIME 1.4. On rappelle également que le nœud de base BN est ici un dispositif de type PRIME 1.3.6 qui peut assurer l'interfaçage entre le compteur M3 et le dispositif concentrateur DC PRIME 1.4 à travers le Ticket 67. On détaille maintenant les étapes successives. Le compteur M3 envoie une trame de balise BCN au dispositif de traduction de protocole DTP4. Le dispositif de traduction de protocole DTP4 envoie une requête REG_REQ au compteur M3, qui la fait suivre au dispositif nœud de base BN. En retour, le dispositif nœud de base BN envoie une trame de réponse REG_RESP au compteur M3, qui la fait suivre au dispositif de traduction de protocole DTP4. Enfin, le dispositif de traduction de protocole DTP4 envoie une requête d'acquittement REG_ACK au compteur M3, qui la fait suivre au dispositif nœud de base BN. Le dispositif nœud de base BN envoie une trame NEW_DEVICE_NOTIFICATION au dispositif concentrateur DC PRIME 1.4, et ce dernier répond au dispositif nœud de base BN en lui envoyant une trame d'acquittement ACK.

Parmi les trames précitées :
- la trame BCN est une trame de type balise (BEACON) transmise par un commutateur (nœud dans l'état « Commutateur ») (voir la section 4.4.4 de la spécification de PRIME 1.4 publiée le 17 novembre 2023) ;
- la trame REG_REQ est une requête d'enregistrement initiée par un compteur ou un dispositif de traduction de protocole DTP ;
- la trame REG_RSP est une réponse à la requête d'enregistrement REG_REQ envoyée par le dispositif concentrateur DC ; et
- la trame REG_ACK est une trame d'acquittement d'enregistrement envoyée par un compteur ou un dispositif de traduction de protocole DTP.

Les trames REG_REQ, REG_RSP et REG_ACK sont décrites dans la section 4.4.2.6.3 de version de la spécification de PRIME 1.4 publiée le 17 novembre 2023.

Si un dispositif de traduction de protocole DTP est connecté au réseau de communication mixte via son interface PRIME 1.4, il continuera à communiquer avec son commutateur (nœud dans l'état « Commutateur ») de niveau supérieur (voir plus bas une explication des niveaux dans le réseau de communication mixte) uniquement avec le protocole PRIME 1.4. Sinon, il n'utilisera que le protocole PRIME 1.3.6 pour communiquer avec lui. Par exemple, le dispositif de traduction de protocole DTP3 communique toujours avec le compteur commutateur M2 (compteur M2 dans l'état « Commutateur ») en utilisant le protocole PRIME 1.4, alors que le dispositif de traduction de protocole DTP4 communique avec le compteur commutateur M3 (compteur M3 dans l'état « Commutateur ») en utilisant le protocole PRIME 1.3.6.

### Exemple de processus de promotion d'un DTP

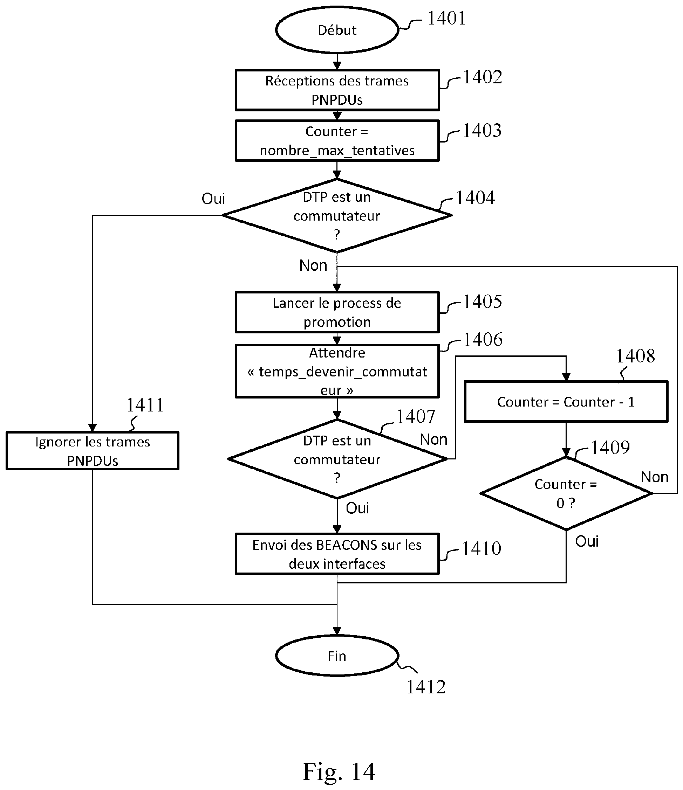

La **Fig. 14** illustre schématiquement un algorithme de promotion d'un dispositif de traduction de protocole DTP, selon un mode de réalisation de l'invention. Cet algorithme est géré par la couche application 501 qui est exécutée par le processeur applicatif 402.

Les deux paramètres suivants sont utilisés : « nombre_max_tentatives » est un entier qui indique le nombre de tentatives de demande de promotion après la réception d'une trame PNPDU par le dispositif de traduction de protocole DTP, et « temps_devenir_commutateur » est la durée à attendre par le processeur d'application pour vérifier si le dispositif de traduction de protocole DTP est devenu un commutateur (c'est-à-dire est passé dans l'état « Commutateur ») après le déclenchement du processus de promotion. Ces deux paramètres sont programmables par la couche application 501 (logiciel applicatif).

Pour mémoire, une trame PNPDU est une trame envoyée par un compteur PRIME 1.3.6 ou PRIME 1.4 qui souhaite rejoindre le réseau de communication mais qui n'a pas reçu de trames de type balise (BEACON).

Dans une étape 1402, qui suit l'étape de début 1401, le dispositif de traduction de protocole écoute sur le canal de communication CHn, pour détecter la réception d'une trame PNPDU (trame de type demande de promotion) conforme au protocole de communication PRIME 1.4, et sur le canal de communication CH1, pour détecter la réception d'une trame PNPDU conforme au protocole de communication PRIME 1.3.6.

Dans une étape 1403, le dispositif de traduction de protocole initialise une variable « Counter » avec la valeur du paramètre « nombre_max_tentatives ».

Dans une étape 1404, le dispositif de traduction de protocole vérifie s'il est dans l'état « Commutateur ». S'il est dans l'état « Commutateur », il exécute l'étape 1411 dans laquelle il ignore les trames PNPDU reçues. S'il n'est pas dans l'état « Commutateur », il exécute l'étape 1405 dans laquelle il lance le process de promotion (via son interface d'enregistrement, cf. Fig. 11), puis l'étape 1406 dans laquelle il attend pendant la valeur de durée du paramètre « temps_devenir_commutateur », et l'étape 1407 dans laquelle il vérifie à nouveau s'il est dans l'état « Commutateur ».

A l'issue de l'étape 1407, si le dispositif de traduction de protocole est dans l'état « Commutateur », il exécute l'étape 1410 dans laquelle il envoie des trames de type balise (Beacon) sur chacune des deux interfaces PRIME 1.3.6 et PRIME 1.4, puis passe à l'étape de fin 1412.

Si à l'issue de l'étape 1407 le dispositif de traduction de protocole n'est pas dans l'état « Commutateur », il exécute l'étape 1408 dans laquelle il décrémente la variable « Counter » d'une unité, puis l'étape 1409 dans laquelle il vérifie si la variable « Counter » est égale à zéro. Si la variable « Counter » est égale à zéro, il passe à l'étape de fin 1412 ; sinon, il revient à l'étape 1405.

On décrit maintenant plus en détail, à travers deux exemples (pour les dispositifs de traduction de protocole DTP3 et DTP4 respectivement), le process de promotion.

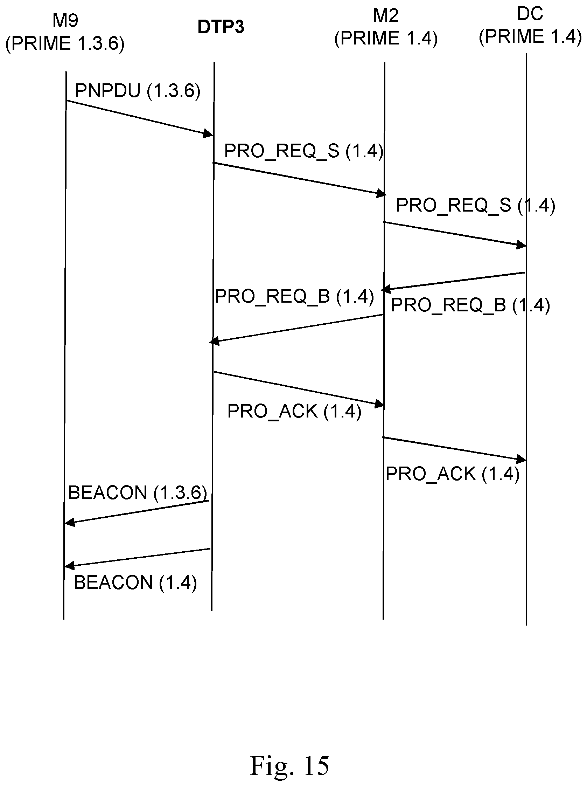

La **Fig. 15** illustre schématiquement le process de promotion du dispositif de traduction de protocole DTP3 de la Fig. 3, selon un mode de réalisation de l'invention. On détaille maintenant les étapes successives. Le dispositif de traduction de protocole DTP3 reçoit une trame PNPDU de la part du compteur M9 (qui est un compteur de type PRIME 1.3.6) puis envoie une trame de requête de promotion PRO_REQ_S au compteur M2 (qui est un compteur de type PRIME 1.4). Le compteur M2 fait suivre la trame de requête de promotion PRO_REQ_S au dispositif concentrateur DC et reçoit en retour une trame de réponse PRO_REQ_B. Le compteur M2 fait suivre la trame de réponse PRO_REQ_B au dispositif de traduction de protocole DTP3 qui en retour envoie une trame d'acquittement PRO_REQ_ACK au compteur M2, qui lui-même la fait suivre au dispositif concentrateur DC. En outre, le dispositif de traduction de protocole DTP3 envoie des trames de type balise BEACON sur chacune des deux interfaces PRIME 1.3.6 et PRIME 1.4

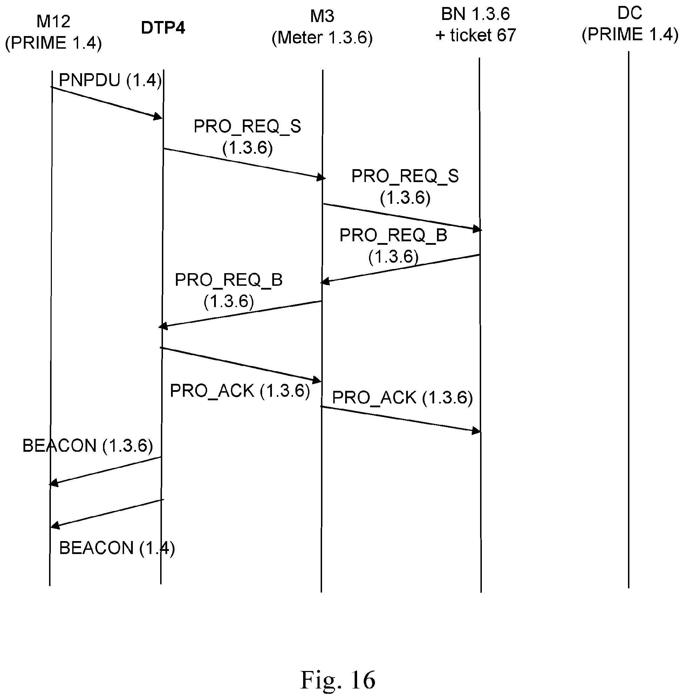

La **Fig. 16** illustre schématiquement le process de promotion du dispositif de traduction de protocole DTP4 de la Fig. 3, selon un mode de réalisation de l'invention. On détaille maintenant les étapes successives. Le dispositif de traduction de protocole DTP4 reçoit une trame PNPDU de la part du compteur M12 (qui est un compteur de type PRIME 1.4) puis envoie une trame de requête de promotion PRO_REQ_S au compteur M3 (qui est un compteur de type PRIME 1.3.6). Le compteur M3 fait suivre la trame de requête de promotion PRO_REQ_S au dispositif nœud de base BN et reçoit en retour une trame de réponse PRO_REQ_B. Le compteur M3 fait suivre la trame de réponse PRO_REQ_B au dispositif de traduction de protocole DTP4 qui en retour envoie une trame d'acquittement PRO_ACK au compteur M3, qui lui-même la fait suivre au dispositif nœud de base BN. En outre, le dispositif de traduction de protocole DTP4 envoie des trames de type balise BEACON sur chacune des deux interfaces PRIME 1.3.6 et PRIME 1.4.

Parmi les trames précitées :
- la trame PNPDU est une trame envoyée par un compteur ou par un dispositif de traduction de protocole DTP qui souhaite rejoindre le réseau de communication mais qui n'as pas reçu de trames de type balise (BEACON) (voir la section 4.4.3 de la version de la spécification PRIME 1.4 publiée le 17 novembre 2023) ;
- la trame PRO_REQ_S est une trame de requête de promotion envoyée par un compteur ou un dispositif de traduction de protocole DTP ;
- la trame PRO_REQ_B est une trame de réponse (à une trame PRO_REQ_S) envoyée par le dispositif concentrateur DC (ou le dispositif nœud de base BN) ; et
- la trame PRO_ACK est une trame d'acquittement envoyée par un compteur ou un dispositif de traduction de protocole DTP suite à la réception de la trame PRO_REQ_B.

Les trames PRO_REQ_S, PRO_REQ_B et PRO_REQ_ACK sont décrites dans la section 4.4.2.6.5 de la version de la spécification PRIME 1.4 publiée le 17 novembre 2023.

### Exemple de mécanisme « Keep Alive » d'un DTP

Le mécanisme de « Keep Alive » est géré par le dispositif concentrateur DC qui est de type PRIME 1.4. Ce mécanisme repose sur l'envoi d'un message, d'un appareil à un autre, pour vérifier que le lien entre les deux est actif, ou pour empêcher que le lien soit brisé. Les compteurs PRIME 1.3.6 utilisent le mécanisme de « Keep Alive » défini dans la spécification PRIME 1.3.6, tandis que les compteurs PRIME 1.4 utilisent le mécanisme de « Keep Alive » défini dans la spécification PRIME 1.4. Chaque dispositif de traduction de protocole DTP utilise le même mécanisme de « keep alive » que celui utilisé par son commutateur (c'est-à-dire quand il est dans l'état « Commutateur »).

### Exemple de gestion de la traduction des trames reçues

Un programme applicatif, compris dans la couche application 501 exécutée par le processeur applicatif 402, permet au dispositif de traduction de protocole DTP d'assurer la gestion des trames reçues. L'objectif est bien de décider, parmi les trames reçues, celles qui seront ignorées, celles qui seront traduites avant transfert et celles qui seront transférées sans traduction.

Un dispositif de traduction de protocole DTP installé au niveau N de l'arborescence d'un réseau de communication mixte communique avec un commutateur (c'est-à-dire un équipement de réseau (par exemple un compteur, un nœud de base ou un autre dispositif de traduction de protocole) qui est dans l'état « Commutateur ») dans le niveau N-1, en utilisant le même protocole que celui utilisé durant les process (phases) d'enregistrement et de promotion. Par exemple, si le dispositif de traduction de protocole DTP s'est enregistré dans le réseau de communication à travers un commutateur conforme au protocole PRIME 1.3.6, il continue de communiquer en utilisant ce commutateur.

Un dispositif de traduction de protocole DTP est un commutateur pour d'autres nœuds localisés au niveau N+1 de l'arborescence de réseau. Ces autres nœuds peuvent être des compteurs PRIME 1.3.6, des compteurs PRIME 1.4 ou d'autres dispositifs de traduction de protocole. Le dispositif de traduction de protocole DTP en question doit enregistrer dans une table dédiée (appelée par exemple « DTP_Switch_Nodes ») ces autres nœuds localisés au niveau N+1, ainsi que les protocoles qu'il doit utiliser pour communiquer avec eux.

Dans un mode de réalisation, le process de traitement des trames par le dispositif de traduction de protocole DTP est le suivant :
- les trames envoyées par d'autres nœuds localisés au niveau N+1 (par exemple des compteurs ou d'autres dispositifs de traduction de protocole DTP), inclus dans la liste « DTP_Switch_Nodes », sont transférées, après traitement (traduction ou répétition) par le dispositif de traduction de protocole DTP, au commutateur du niveau N-1. La traduction ou non dépend du type de chacun des deux protocoles impliqués : le type du protocole implémenté par le nœud localisé au niveau N+1 et inclus dans la table « DTP_Switch_Nodes » et le type du protocole utilisé par le dispositif de traduction de protocole DTP pour communiquer avec le commutateur du niveau N-1 ;
- les trames envoyées par le commutateur du niveau N-1 et destinées à un nœud du niveau N+1 et inclus dans la liste « DTP_Switch_Nodes » sont traitées (traduction ou répétition) en fonction du protocole implémenté par ce nœud du niveau N+1 ;
- les trames PNPDU sont ignorées si le dispositif de traduction de protocole DTP est devenu un commutateur ; et
- les trames de type balise (BEACON) sont ignorées.

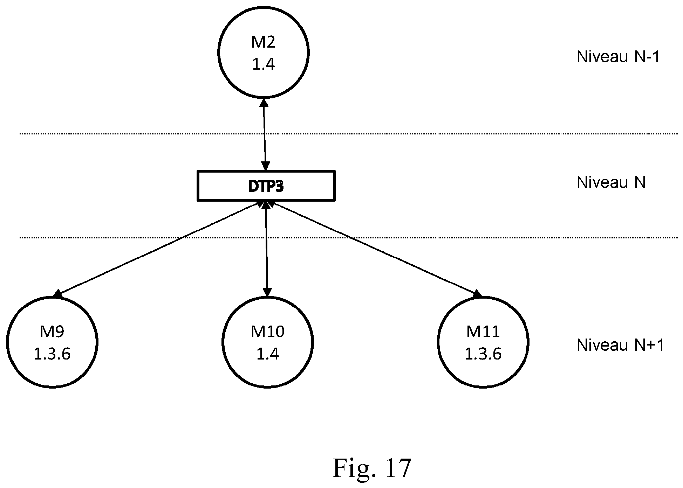

La **Fig. 17** illustre une partie du réseau de communication mixte de la Fig. 3, et les niveaux de réseau qui composent cette partie de réseau. Dans cet exemple, le dispositif de traduction de protocole DTP3 appartient au niveau N du réseau de communication. Il communique avec le commutateur M2, qui est un compteur PRIME 1.4 du niveau N-1, en utilisant l'interface de communication PRIME 1.4. Les nœuds appartenant au niveau N+1 et qui communiquent avec le dispositif de traduction de protocole DTP3 sont les compteurs M9 (de type PRIME 1.3.6), M10 (de type PRIME 1.4) et M11 (de type PRIME 1.3.6). Le contenu de la table « DTP_Switch_Nodes » est donc dans cet exemple conforme au tableau 2 ci-dessous :

**[Tableau 2]**

| ID de Noeud | Protocole |
|---|---|
| M9 | PRIME 1.3.6 |
| M10 | PRIME 1.4 |
| M11 | PRIME 1.3.6 |

Par exemple, chaque trame PRIME 1.4 reçue du compteur M2 et destinée au compteur M9 est traduite, par le dispositif de traduction de protocole DTP3, en une trame PRIME 1.3.6 qui est transmise au compteur M2. Dans l'autre sens, chaque trame PRIME 1.3.6 reçue du compteur M9 et destinée au compteur M2 est traduite, par le dispositif de traduction de protocole DTP3, en une trame PRIME 1.4 qui est transmise au compteur M2.

Toujours à titre d'exemple, chaque trame PRIME 1.4 reçue du compteur M2 et destinée au compteur M10 est transférée sans traduction à ce compteur M10, par le dispositif de traduction de protocole DTP3. Dans l'autre sens, chaque trame PRIME 1.4 reçue du compteur M10 et destinée au compteur M2 est transférée sans traduction à ce compteur M2, par le dispositif de traduction de protocole DTP3.

## Revendications

1. Procédé de communication dans un réseau de communication par courants porteurs en ligne, dit réseau de communication CPL, mixte (300) qui est implémenté sur un réseau d'alimentation électrique et qui comprend : un dispositif concentrateur (DC) implémentant un premier protocole de communication par courants porteurs en ligne, dit premier protocole de communication CPL ; un ensemble de dispositifs nœuds comprenant un premier sous-ensemble, contenant au moins un premier dispositif nœud (M1, M2, M4, M5, M6, M10, M12, M14, M16, M18, M19) implémentant le premier protocole de communication CPL, **caractérisé par**: un deuxième sous-ensemble, contenant au moins un dispositif nœud (M3, M7, M8, M9, M11, M13, M15, M17, M20) implémentant un deuxième protocole de communication par courants porteurs en ligne, dit deuxième protocole de communication CPL ; et au moins un dispositif de traduction de protocole (DTP1, DTP2, DTP3, DTP4) comprenant une circuiterie électronique ; le procédé comprenant un processus de traduction exécuté par la circuiterie électronique du dispositif de traduction de protocole et comprenant :
- dans un premier sens :
∘ recevoir (701) une première trame conforme au premier protocole de communication CPL, transmise par un premier équipement de réseau implémentant le premier protocole de communication CPL ;
∘ traduire (702) la première trame en une deuxième trame conforme au deuxième protocole de communication CPL ; et
∘ transmettre (703) la deuxième trame à un deuxième équipement de réseau implémentant le deuxième protocole de communication CPL ; et
- dans un deuxième sens :
∘ recevoir (704) une troisième trame conforme au deuxième protocole de communication CPL, transmise par le deuxième équipement de réseau ;
∘ traduire (705) la troisième trame en une quatrième trame conforme au premier protocole de communication CPL ; et
∘ transmettre (706) la quatrième trame au premier équipement de réseau.

2. Procédé selon la revendication 1, dans lequel le dispositif concentrateur (DC) implémentant le premier protocole de communication CPL est l'unique dispositif concentrateur du réseau de communication CPL mixte.

3. Procédé selon l'une quelconque des revendications 1 et 2, dans lequel le premier équipement de réseau appartient au groupe comprenant : un dispositif nœud du premier sous-ensemble, le dispositif concentrateur et un autre dispositif de traduction de protocole, et dans lequel le deuxième équipement de réseau appartient au groupe comprenant : un dispositif nœud du deuxième sous-ensemble, un autre dispositif de traduction de protocole et un dispositif nœud de base (BN) configuré pour assurer un interfaçage entre le dispositif concentrateur et un dispositif nœud du deuxième sous-ensemble.

4. Procédé selon l'une quelconque des revendications 1 à 3, dans lequel le premier protocole de communication CPL est la version 1.4 du protocole de communication PRIME, pour « PoweRline Intelligent Metering Evolution », et le deuxième protocole de communication CPL est la version 1.3.6 du protocole de communication PRIME.

5. Procédé selon l'une quelconque des revendications 1 à 4, dans lequel les dispositifs nœuds sont des compteurs communicants.

6. Procédé selon l'une quelconque des revendications 1 à 5, comprenant en outre un processus de répétition, exécuté par la circuiterie électronique du dispositif de traduction de protocole et comprenant:
- recevoir (801) une cinquième trame conforme au premier, respectivement deuxième, protocole de communication CPL, transmise par un troisième équipement de réseau implémentant le premier, respectivement deuxième, protocole de communication CPL ; et
- transférer (802) la cinquième trame à un quatrième équipement de réseau implémentant le premier, respectivement deuxième, protocole de communication CPL.

7. Procédé selon l'une quelconque des revendications 1 à 6, comprenant en outre un processus d'enregistrement, exécuté par la circuiterie électronique du dispositif de traduction de protocole et comprenant:
- écouter (1102) sur un premier canal de communication, pour détecter la réception d'une trame de type balise conforme au premier protocole de communication CPL, et sur un deuxième canal de communication, pour détecter la réception d'une trame de type balise conforme au deuxième protocole de communication CPL ;
- en fonction des trames de type balise effectivement reçues, décider (1103, 1104, 1105) d'un enregistrement du dispositif de traduction de protocole sur le réseau de communication CPL mixte comme suit :
∘ si une trame de type balise est reçue sur le premier canal de communication et aucune trame de type balise n'est reçue sur le deuxième canal de communication, enregistrement (1106) sur le réseau de communication CPL mixte en utilisant une première interface de communication, conforme au premier protocole de communication CPL, du dispositif de traduction de protocole ;
∘ si une trame de type balise est reçue sur le deuxième canal de communication et aucune trame de type balise n'est reçue sur le premier canal de communication, enregistrement (1107) sur le réseau de communication CPL mixte en utilisant une deuxième interface de communication, conforme au deuxième protocole de communication CPL, du dispositif de traduction de protocole ;
∘ si une trame de type balise est reçue sur le premier canal de communication et une autre trame de type balise est reçue sur le deuxième canal de communication, enregistrement (1108) sur le réseau de communication CPL mixte en utilisant une des première et deuxième interfaces de communication, choisie en fonction d'un critère de sélection prédéterminé ; et
∘ si aucune trame de type balise n'est reçue sur les premier et deuxième canaux de communication, envoi (1111) d'une première trame de type demande de promotion, en utilisant la première interface de communication, et d'une deuxième trame de type demande de promotion, en utilisant la deuxième interface de communication.

8. Procédé selon l'une quelconque des revendications 1 à 7, comprenant en outre un processus de promotion, exécuté par la circuiterie électronique du dispositif de traduction de protocole et comprenant:
- écouter (1402) sur un premier canal de communication, pour détecter la réception d'une trame de type demande de promotion conforme au premier protocole de communication CPL, et sur un deuxième canal de communication, pour détecter la réception d'une trame de type demande de promotion conforme au deuxième protocole de communication CPL ;
- si une trame de type demande de promotion est effectivement reçue sur au moins un des premier et deuxième canaux de communication, transmettre (1405) une demande de promotion via une interface de communication avec laquelle le dispositif de traduction de protocole s'est enregistré sur le réseau de communication CPL mixte ;
- si le dispositif de traduction de protocole passe dans un état de commutateur, envoyer (1410) une première trame de type balise, en utilisant une première interface de communication conforme au premier protocole de communication CPL, et une deuxième trame de type balise, en utilisant une deuxième interface de communication conforme au deuxième protocole de communication CPL.

9. Produit programme d'ordinateur, comportant des instructions entraînant l'exécution, par un processeur (601), du procédé selon l'une quelconque des revendications 1 à 8, lorsque lesdites instructions sont exécutées par le processeur.

10. Support de stockage (603), stockant un programme d'ordinateur comportant des instructions entraînant l'exécution, par un processeur (601), du procédé selon l'une quelconque des revendications 1 à 8, lorsque lesdites instructions sont lues et exécutées par le processeur.

11. Dispositif de traduction de protocole (DTP1, DTP2, DTP3, DTP4), configuré pour être utilisé dans un réseau de communication par courants porteurs en ligne, dit réseau de communication CPL, mixte (300) qui est implémenté sur un réseau d'alimentation électrique et qui comprend : un dispositif concentrateur (DC) implémentant un premier protocole de communication par courants porteurs en ligne, dit premier protocole de communication CPL ; un ensemble de dispositifs nœuds comprenant un premier sous-ensemble, contenant au moins un premier dispositif nœud (M1, M2, M4, M5, M6, M10, M12, M14, M16, M18, M19) implémentant le premier protocole de communication CPL, et un deuxième sous-ensemble, contenant au moins un dispositif nœud (M3, M7, M8, M9, M11, M13, M15, M17, M20) implémentant un deuxième protocole de communication par courants porteurs en ligne, dit deuxième protocole de communication CPL ; ledit dispositif de traduction de protocole comprenant une circuiterie électronique configurée pour exécuter le procédé selon l'une quelconque des revendications 1 à 8.

12. Réseau de communication par courants porteurs en ligne, dit réseau de communication CPL, mixte (300), implémenté sur un réseau d'alimentation électrique et comprenant :
- un dispositif concentrateur (DC) implémentant un premier protocole de communication CPL ;
- un ensemble de dispositifs nœuds comprenant un premier sous-ensemble, contenant au moins un premier dispositif nœud (M1, M2, M4, M5, M6, M10, M12, M14, M16, M18, M19) implémentant le premier protocole de communication CPL, et un deuxième sous-ensemble, contenant au moins un dispositif nœud (M3, M7, M8, M9, M11, M13, M15, M17, M20) implémentant un deuxième protocole de communication CPL ; et
- au moins un dispositif de traduction de protocole (DTP1, DTP2, DTP3, DTP4) selon la revendication 11.

## Patentansprüche

1. Verfahren zur Kommunikation in einem gemischten Kommunikationsnetzwerk über Stromleitungen, als CPL-Kommunikationsnetzwerk (300) bezeichnet, das in einem Stromversorgungsnetz implementiert wird, und das Folgendes umfasst: eine Konzentratorvorrichtung (DC), die ein erstes Kommunikationsprotokoll über Stromleitungen, als erstes CPL-Kommunikationsprotokoll bezeichnet, implementiert; eine Gruppe von Knotenvorrichtungen, die eine erste Teilgruppe umfasst, die mindestens eine erste Knotenvorrichtung (M1, M2, M4, M5, M6, M10, M12, M14, M16, M18, M19) enthält, die das erste CPL-Kommunikationsprotokoll implementiert,
**gekennzeichnet durch**:
eine zweite Teilgruppe, die mindestens eine Knotenvorrichtung (M3, M7, M8, M9, M11, M13, M15, M17, M20) enthält, die ein zweites Kommunikationsprotokoll über Stromleitungen, als zweites CPL-Kommunikationsprotokoll bezeichnet, implementiert; und mindestens eine Protokollübersetzungsvorrichtung (DTP1, DTP2, DTP3, DTP4), die eine elektronische Schaltungsanordnung umfasst; wobei das Verfahren einen durch die elektronische Schaltungsanordnung der Protokollübersetzungsvorrichtung ausgeführten Übersetzungsprozess umfasst, der Folgendes umfasst:
- in einer ersten Richtung:
∘ Empfangen (701) eines ersten Rahmens gemäß dem ersten CPL-Kommunikationsprotokoll, der von einer ersten Netzwerkausstattung übertragen wird, die das erste CPL-Kommunikationsprotokoll implementiert;
∘ Übersetzen (702) des ersten Rahmens in einen zweiten Rahmen gemäß dem zweiten CPL-Kommunikationsprotokoll; und
∘ Übertragen (703) des zweiten Rahmens an eine zweite Netzwerkausstattung, die das zweite CPL-Kommunikationsprotokoll implementiert; und
- in einer zweiten Richtung:
∘ Empfangen (704) eines dritten Rahmens gemäß dem zweiten CPL-Kommunikationsprotokoll, der von der zweiten Netzwerkausstattung übertragen wird;
∘ Übersetzen (705) des dritten Rahmens in einen vierten Rahmen gemäß dem ersten CPL-Kommunikationsprotokoll; und
∘ Übertragen (706) des vierten Rahmens an die erste Netzwerkausstattung.

2. Verfahren nach Anspruch 1, wobei die Konzentratorvorrichtung (DC), die das erste CPL-Kommunikationsprotokoll implementiert, die einzige Konzentratorvorrichtung des gemischten CPL-Kommunikationsnetzwerks ist.

3. Verfahren nach einem der Ansprüche 1 und 2, wobei die erste Netzwerkausstattung zu der Gruppe gehört, die Folgendes umfasst: eine Knotenvorrichtung der ersten Teilgruppe, die Konzentratorvorrichtung und eine andere Protokollübersetzungsvorrichtung, und wobei die zweite Netzwerkausstattung zu der Gruppe gehört, die Folgendes umfasst: eine Knotenvorrichtung der zweiten Teilgruppe, eine andere Protokollübersetzungsvorrichtung und eine Basisknotenvorrichtung (BN), die dazu konfiguriert ist, eine Schnittstellenbildung zwischen der Konzentratorvorrichtung und einer Knotenvorrichtung der zweiten Teilgruppe sicherzustellen.

4. Verfahren nach einem der Ansprüche 1 bis 3, wobei das erste CPL-Kommunikationsprotokoll die Version 1.4 des PRIME-Kommunikationsprotokolls, für "PoweRline Intelligent Metering Evolution" ist, und das zweite CPL-Kommunikationsprotokoll die Version 1.3.6 des PRIME-Kommunikationsprotokolls ist.

5. Verfahren nach einem der Ansprüche 1 bis 4, wobei die Knotenvorrichtungen kommunizierende Zähler sind.

6. Verfahren nach einem der Ansprüche 1 bis 5, das außerdem einen Wiederholungsprozess umfasst, der von der elektronischen Schaltungsanordnung der Protokollübersetzungsvorrichtung ausgeführt wird und Folgendes umfasst:
- Empfangen (801) eines fünften Rahmens gemäß dem ersten bzw. dem zweiten CPL-Kommunikationsprotokoll, der von einer dritten Netzwerkausstattung übertragen wird, die das erste bzw. das zweite CPL-Kommunikationsprotokoll implementiert; und
- Transferieren (802) des fünften Rahmens an eine vierte Netzwerkausstattung, die das erste bzw. das zweite CPL-Kommunikationsprotokoll implementiert.

7. Verfahren nach einem der Ansprüche 1 bis 6, das außerdem einen Registrierungsprozess umfasst, der von der elektronischen Schaltungsanordnung der Protokollübersetzungsvorrichtung ausgeführt wird und Folgendes umfasst:
- Abhören (1102) eines ersten Kommunikationskanals, um den Empfang eines Rahmens vom Beacon-Typ gemäß dem ersten CPL-Kommunikationsprotokoll zu erfassen, und eines zweiten Kommunikationskanals, um den Empfang eines Rahmens gemäß dem zweiten CPL-Kommunikationsprotokoll zu erfassen;
- in Abhängigkeit von den tatsächlich empfangenen Rahmen vom Beacon-Typ, Entscheiden (1103, 1104, 1105) über eine Registrierung der Protokollübersetzungsvorrichtung in dem gemischten CPL-Kommunikationsnetzwerk wie folgt:
∘ wenn ein Rahmen vom Beacon-Typ auf dem ersten Kommunikationskanal empfangen wird und kein Rahmen vom Beacon-Typ auf dem zweiten Kommunikationskanal empfangen wird, Registrieren (1106) in dem gemischten CPL-Kommunikationsnetzwerk, unter Verwendung einer ersten Kommunikationsschnittstelle gemäß dem ersten CPL-Kommunikationsprotokoll, der Protokollübersetzungsvorrichtung;
∘ wenn ein Rahmen vom Beacon-Typ auf dem zweiten Kommunikationskanal empfangen wird und wenn kein Rahmen vom Beacon-Typ auf dem ersten Kommunikationskanal empfangen wird, Registrieren (1107) in dem gemischten CPL-Kommunikationsnetzwerk, unter Verwendung einer zweiten Kommunikationsschnittstelle gemäß dem zweiten CPL-Kommunikationsprotokoll, der Protokollübersetzungsvorrichtung;
∘ wenn ein Rahmen vom Beacon-Typ auf dem ersten Kommunikationskanal und ein anderer Rahmen vom Beacon-Typ auf dem zweiten Kommunikationskanal empfangen wird, Registrieren (1108) in dem gemischten CPL-Kommunikationsnetzwerk unter Verwendung einer der ersten und der zweiten Kommunikationsschnittstelle, die in Abhängigkeit von einem vorbestimmten Auswahlkriterium ausgewählt wird; und
∘ wenn kein Rahmen vom Beacon-Typ auf dem ersten und dem zweiten Kommunikationskanal empfangen wird, Senden (1111) eines ersten Rahmens vom Promotionsanforderungstyp unter Verwendung der ersten Kommunikationsschnittstelle und eines zweiten Rahmens vom Promotionsanforderungstyp unter Verwendung der zweiten Kommunikationsschnittstelle.

8. Verfahren nach einem der Ansprüche 1 bis 7, das außerdem einen Promotionsprozess umfasst, der von der elektronischen Schaltungsanordnung der Protokollübersetzungsvorrichtung ausgeführt wird und Folgendes umfasst:
- Abhören (1402) eines ersten Kommunikationskanals, um den Empfang eines Rahmens vom Promotionsanforderungstyp gemäß dem ersten CPL-Kommunikationsprotokoll zu erfassen, und auf einem zweiten Kommunikationskanal, um den Empfang eines Rahmens vom Promotionsanforderungstyp gemäß dem zweiten CPL-Kommunikationsprotokoll zu erfassen;
- wenn ein Rahmen vom Promotionsanforderungstyp effektiv auf mindestens einem des ersten und des zweiten Kommunikationskanals empfangen wird, Übertragen (1405) einer Promotionsanforderung über eine Kommunikationsschnittstelle, mit der sich die Protokollübersetzungsvorrichtung bei dem gemischten CPL-Kommunikationsnetzwerk registriert hat;
- wenn die Protokollübersetzungsvorrichtung in einen Umschaltzustand übergeht, Senden (1410) eines ersten Rahmens vom Beacon-Typ unter Verwendung einer ersten Kommunikationsschnittstelle gemäß dem ersten CPL-Kommunikationsprotokoll, und eines zweiten Rahmens vom Beacon-Typ unter Verwendung einer zweiten Kommunikationsschnittstelle gemäß dem zweiten CPL-Kommunikationsprotokoll.

9. Computerprogrammprodukt, das Anweisungen umfasst, die das Ausführen durch einen Prozessor (601) des Verfahrens nach einem der Ansprüche 1 bis 8 bewirkt, wenn die Anweisungen von dem Prozessor ausgeführt werden.

10. Speichermedium (603), das ein Computerprogramm speichert, das Anweisungen umfasst, die die Ausführung durch einen Prozessor (601) des Verfahrens nach einem der Ansprüche 1 bis 8 bewirkt, wenn die Anweisungen von dem Prozessor gelesen und ausgeführt werden.

11. Protokollübersetzungsvorrichtung (DTP1, DTP2, DTP3, DTP4), die dazu konfiguriert ist, in einem gemischten Kommunikationsnetzwerk über Stromleitungen (300), als CPL-Kommunikationsnetzwerk bezeichnet, verwendet zu werden, das auf einem Stromversorgungsnetz implementiert ist und Folgendes umfasst: eine Konzentratorvorrichtung (DC), die ein erstes Kommunikationsprotokoll über Stromleitungen, als erstes CPL-Kommunikationsprotokoll bezeichnet, implementiert; eine Gruppe von Knotenvorrichtungen, die eine erste Teilgruppe umfasst, die mindestens eine erste Knotenvorrichtung (M1, M2, M4, M5, M6, M10, M12, M14, M16, M18, M19), die das erste CPL-Kommunikationsprotokoll implementiert, umfasst, und eine zweite Teilgruppe, die mindestens eine Knotenvorrichtung (M3, M7, M8, M9, M11, M13, M15, M17, M20), die ein zweites Kommunikationsprotokoll über Stromleitungen implementiert, als zweites CPL-Kommunikationsprotokoll bezeichnet, enthält; wobei die Protokollübersetzungsvorrichtung eine elektronische Schaltungsanordnung umfasst, die dazu konfiguriert ist, das Verfahren nach einem der Ansprüche 1 bis 8 auszuführen.

12. Gemischtes Kommunikationsnetzwerk über Stromleitungen (300), als CPL-Kommunikationsnetzwerk bezeichnet, das auf einem Stromversorgungsnetz implementiert ist und Folgendes umfasst:
- eine Konzentratorvorrichtung (DC), die ein erstes CPL-Kommunikationsprotokoll implementiert;
- eine Gruppe von Knotenvorrichtungen, die eine erste Teilgruppe umfasst, die mindestens eine erste Knotenvorrichtung (M1, M2, M4, M5, M6, M10, M12, M14, M16, M18, M19) enthält, die das erste CPL-Kommunikationsprotokoll implementiert, und eine zweite Teilgruppe, die mindestens eine Knotenvorrichtung (M3, M7, M8, M9, M11, M13, M15, M17, M20), die ein zweites CPL-Kommunikationsprotokoll implementiert, umfasst; und
- mindestens eine Protokollübersetzungsvorrichtung (DTP1, DTP2, DTP3, DTP4) nach Anspruch 11.

## Claims

1. Method for communicating in a mixed powerline communication network (300), referred to as mixed PLC communication network, that is implemented on an electrical supply network and which comprises: a concentrator device (DC) implementing a first powerline communication protocol, referred to as first PLC communication protocol; a set of node devices comprising a first subset containing at least one first node device (M1, M2, M4, M5, M6, M10, M12, M14, M16, M18, M19) implementing the first PLC communication protocol, **characterised by** a second subset containing at least one node device (M3, M7, M8, M9, M11, M13, M15, M17, M20) implementing a second powerline communication protocol, referred to as second PLC communication protocol; and at least one protocol translation device (DTP1, DTP2, DTP3, DTP4) comprising electronic circuitry; the method comprising a translation process executed by the electronic circuitry of the protocol translation device and comprising:
- in a first direction:
∘ receiving (701) a first frame compliant with the first PLC communication protocol, transmitted by a first item of network equipment implementing the first PLC communication protocol;
∘ translating (702) the first frame into a second frame compliant with the second PLC communication protocol; and
∘ transmitting (703) the second frame to a second item of network equipment implementing the second PLC communication protocol; and
- in a second direction:
∘ receiving (704) a third frame compliant with the second PLC communication protocol, transmitted by the second item of network equipment;
∘ translating (705) the third frame into a fourth frame compliant with the first PLC communication protocol; and
∘ transmitting (706) the fourth frame to the first item of network equipment.

2. Method according to claim 1, wherein the concentrator device (DC) implementing the first PLC communication protocol is the only concentrator device in the mixed PLC communication network.

3. Method according to either one of claims 1 and 2, wherein the first item of network equipment belongs to the group comprising: a node device in the first subset, the concentrator device and another protocol translation device, and wherein the second item of network equipment belongs to the group comprising: a node device in the second subset, another protocol translation device and a base node device (BN) configured to provide an interface between the concentrator device and a node device in the second subset.

4. Method according to any one of claims 1 to 3, wherein the first PLC communication protocol is version 1.4 of the PRIME, standing for "PoweRline Intelligent Metering Evolution", communication protocol, and the second PLC communication protocol is version 1.3.6 of the PRIME communication protocol.

5. Method according to any one of claims 1 to 4, wherein the node devices are smart meters.

6. Method according to any one of claims 1 to 5, furthermore comprising a repetition process, executed by the electronic circuitry of the protocol translation device and comprising:
- receiving (801) a fifth frame compliant with the first and respectively second PLC communication protocol, transmitted by a third item of network equipment implementing the first and respectively second PLC communication protocol; and
- transferring (802) the fifth frame to a fourth item of network equipment implementing the first and respectively second PLC communication protocol.

7. Method according to any one of claims 1 to 6, furthermore comprising a registration process, executed by the electronic circuitry of the protocol translation device and comprising:
- listening (1102) on a first communication channel to detect the reception of a frame of the beacon type compliant with the first PLC communication protocol, and on a second communication channel to detect the reception of a frame of the beacon type compliant with the second PLC communication protocol;
- according to the beacon frames actually received, deciding (1103, 1104, 1105) on a registration of the protocol translation device on the mixed PLC communication network as follows:
∘ if a beacon frame is received on the first communication channel and no beacon frame is received on the second communication channel, registration (1106) of the protocol translation device on the mixed PLC communication network using a first communication interface, compliant with the first PLC communication protocol;
∘ if a beacon frame is received on the second communication channel and no beacon frame is received on the first communication channel, registration (1107) of the protocol translation device on the mixed PLC communication network using a second communication interface, compliant with the second PLC communication protocol;
∘ if a beacon frame is received on the first communication channel and another beacon frame is received on the second communication channel, registration (1108) on the mixed PLC communication network using one of the first and second communication interfaces, selected according to a predetermined selection criterion; and
∘ if no beacon frame is received on the first and second communication channels, sending (1111) a first frame of the promotion request type using the first communication interface, and a second frame of the promotion request type using the second communication interface.

8. Method according to any one of claims 1 to 7, furthermore comprising a promotion process, executed by the electronic circuitry of the protocol translation device and comprising:
- listening (1402) on a first communication channel to detect the reception of a frame of the promotion request type compliant with the first PLC communication protocol, and on a second communication channel to detect the reception of a frame of the promotion request type compliant with the second PLC communication protocol;
- if a promotion request frame is actually received on at least one of the first and second communication channels, transmitting (1405) a promotion request via a communication interface with which the protocol translation device is registered on the mixed PLC communication network;
- if the protocol translation device goes into a switch state, sending (1410) a first beacon frame using a first communication interface compliant with the first PLC communication protocol, and a second beacon frame using a second communication interface compliant with the second PLC communication protocol.

9. Computer program product comprising instructions causing the execution, by a processor (601), of the method according to any one of claims 1 to 8, when the instructions are executed by a processor.

10. Storage medium (603), storing a computer program product comprising instructions causing the execution, by a processor (601), of the method according to any one of claims 1 to 8, when the instructions are read and executed by the processor.

11. Protocol translation device (DTP1, DTP2, DTP3, DTP4), configured to be used in a mixed powerline communication network, referred to as PLC communication network (300), that is implemented on an electrical supply network and which comprises: a concentrator device (DC) implementing a first powerline communication protocol, referred to as first PLC communication protocol; a set of node devices comprising a first subset containing at least one first node device (M1, M2, M4, M5, M6, M10, M12, M14, M16, M18, M19) implementing the first PLC communication protocol, and a second subset containing at least one node device (M3, M7, M8, M9, M11, M13, M15, M17, M20) implementing a second powerline communication protocol, referred to as second PLC communication protocol; said protocol translation device comprising electronic circuitry configured to execute the method according to any one of claims 1 to 8.

12. Mixed powerline communication network (300), referred to as PLC communication network, implemented on an electricity supply network and comprising:
- a concentrator device (DC) implementing a first PLC communication protocol;
- a set of node devices comprising a first subset containing at least one first node device (M1, M2, M4, M5, M6, M10, M12, M14, M16, M18, M19) implementing the first PLC communication protocol, and a second subset containing at least one node device (M3, M7, M8, M9, M11, M13, M15, M17, M20) implementing a second PLC communication protocol; and
- at least one protocol translation device (DTP1, DTP2, DTP3, DTP4) according to claim 11.
